# EUROPÄISCHE PATENTSCHRIFT

(11) **EP 1 303 090 B1**
(45) Veröffentlichungstag und Bekanntmachung des Hinweises auf die Patenterteilung: **09.03.2016**
(21) Anmeldenummer: 02022032.3
(22) Anmeldetag: 01.10.2002
(51) Int. Cl.: H04L 12/58, H04L 29/06, H04L 29/12

(54) **Verfahren zur Übertragung von Daten**
Data transmission method
Procédé de transmission de données

(30) Priorität: 09.10.2001 DE 10149721
(43) Veröffentlichungstag der Anmeldung: 16.04.2003
(73) Patentinhaber: Siemens Aktiengesellschaft, 80333 München (DE)
(72) Erfinder: Laumen, Josef, 31141 Hildesheim (DE); Prenzel, Ralf, Dr., 38259 Salzgitter (DE); Schmidt, Andreas, 38114 Braunschweig (DE); Trauberg, Markus, 38159 Velchede (DE); Wojzischke, Christoph, 38118 Braunschweig (DE)

(56) Entgegenhaltungen:
- WO-A-01/67622
- WO-A-01/69406
- WO-A-92/22033
- WO-A1-01/97504
- WO-A1-02/058359
- SIRBU CMU M: "A CONTENT-TYPE HEADER FIELD FOR INTERNET MESSAGES" IETF STANDARD, INTERNET ENGINEERING TASK FORCE, IETF, CH, März 1988 (1988-03), XP015005989 ISSN: 0000-0003
- "Universal Mobile Telecommunications System (UMTS); Multimedia Messaging Service (MMS), Functional description; Stage 2 (3GPP TS 23.140 version 4.2.0 Release 4); ETSI TS 123 140" ETSI STANDARDS, EUROPEAN TELECOMMUNICATIONS STANDARDS INSTITUTE, SOPHIA-ANTIPO, FR, Bd. 3-T2, Nr. V420, März 2001 (2001-03), XP014007792 ISSN: 0000-0001

## Beschreibung

Die vorliegende Erfindung betrifft ein Verfahren zur Übertragung von Daten nach dem Oberbegriff von Anspruch 1, ein Computerprogrammerzeugnis nach dem Oberbegriff von Anspruch 17, eine Sende- und/oder Empfangseinheit nach dem Oberbegriff von Anspruch 18 und ein Kommunikationssystem nach dem Oberbegriff von Anspruch 20. Dabei wird unter dem Begriff der Daten im Rahmen der vorliegenden Erfindung auch jede Art von Information verstanden, die aus einzelnen Bestandteilen zusammengesetzt ist. Diese einzelnen Bestandteile oder Elemente können dabei nach unterschiedlichen Standards aufgebaut, organisiert und/oder codiert sein. Demnach können in diesem Sinne Daten auch eine multimediale Nachricht darstellen, die diverse Elemente verschiedener Standards umfasst.

Verfahren und Vorrichtungen zur Übertragung verschiedener Formen oder Formate von Daten sind bekannt. Ein Mobilfunksystem nach dem Global System for Mobile Communications Standard, kurz GSM, bietet beispielsweise neben der Sprachtelephonie schon aktuell auch die Möglichkeit, Information in Form kurzer Textnachrichten von bis zu 160 Zeichen Länge zu versenden bzw. zu empfangen. Dieser Dienst wird als Short Message Service bezeichnet, kurz SMS.

Für das Mobilfunksystem der nächsten Generation, das Universal Mobile Telecommunication System UMTS, wird zurzeit eine multimediafähige Variante eines mobilen Nachrichtendienstes standardisiert, der so genannte Multimedia Messaging Service MMS. Der Multimedia Messaging Service spezifiziert Mechanismen zum Transport beliebiger Inhalte von einem Teilnehmer des Service über ein Netzwerk zu einem anderen Teilnehmer.

Informationen als Nachrichten mit multimedialen Inhalten werden im Folgenden zur besseren Abgrenzung von den Textnachrichten des SMS nur noch als Multimedia Message bezeichnet, kurz MM. Im Gegensatz zu dem SMS entfällt bei dem Multimedia Message Service MMS die Beschränkung auf reine Textinhalte.

In einem MMS wird es auch möglich sein, Texte dem individuellen Geschmack entsprechend zu formatieren, sowie beliebige Inhalte in eine Nachricht einzubetten. Dazu zählen z.B. Audio- und Videoinhalte, Standbilder, Grafiken, Texte, u.a. Die nachfolgend offenbarte Lehre bezieht sich generell auf Datenmengen, die aus einzelnen Elementen von Text- und/oder Bilddaten mit oder ohne Ton zusammengesetzt und jeweils nach gleichen oder unterschiedlichen Standards codiert sind, auch wenn in Anwendungen nach dem vorstehend genannten Standard ein wesentliches Einsatzfeld für die vorliegende Erfindung zu sehen ist.

Die bisherige Spezifikation des Multimedia Messaging Service MMS basiert auf zwei Spezifikationen des 3rd Generation Partnership Projekt 3GPP, die zum einen den Dienst grundsätzlich beschreiben [1] und zum anderen die konkrete Funktionalität abstrakt festlegen [2]. Eine mögliche Realisierung von MMS wird in drei Spezifikationen des WAP-Forums beschrieben [3, 4, 5]. Nach dem Stand der Technik ist eine Implementierung von MMS über das Wireless Application Protocol WAP realisierbar. Zur Überbrückung der Luftschnittstelle zwischen einem MMS-tauglichen Endgerät und dem WAP Gateway auf der Netzwerkseite ist nach [5] die Benutzung des WAP Wireless Session Protocol WSP [6] vorgesehen.

Aus der nachveröffentlichten Druckschrift WO 01/97504 A1 resp. EP 1295465 B1 ist ein Verfahren zur Übertragung von Daten einer Multimedianachricht von einer "Multimedia Messaging Service"-Nutzerapplikation eines ersten Teilnehmers (MMS Terminal A) über ein Multimedia Message Service Center (MMSC) zu einer "Multimedia Messaging Service"-Nutzerapplikation eines zweiten Teilnehmers (MMS Terminal B) bekannt, bei dem die Übertragung durch Transaktionen und den Daten zugefügte Header-Felder eines MMS-Transportprotokolls gesteuert wird. Darüber hinaus kann gemäß der Druckschrift eine mit dem MMS-Transportprotokoll gesteuerte Datenübertragung der Multimedianachricht von dem ersten Teilnehmer (MMS Terminal A) zu einem "External Printing Service" erfolgen.

Aus der nachveröffentlichten Druckschrift WO 02/058359 A1 resp. EP 1352500 B1 ist ein Verfahren zur Übertragung von Daten einer Multimedianachricht von einer "Multimedia Messaging Service"-Nutzerapplikation eines ersten Teilnehmers (MMS User Agent A) über ein MMS Relay zu einer "Multimedia Messaging Service"-Nutzerapplikation eines zweiten Teilnehmers (MMS User Agent B) bekannt, bei dem die Übertragung durch Transaktionen und den Daten zugefügte Header-Felder eines MMS-Transportprotokolls gesteuert wird.

Der vorliegenden Erfindung liegt die Aufgabe zugrunde, ein Verfahren, ein Computerprogrammerzeugnis, eine Sende- und/oder Empfangseinheit und ein Kommunikationssystem vorzuschlagen, das einem Absender zusätzliche Möglichkeit zur Datenversendung bei einem höheren Grad von Flexibilität zur Anpassung eines gegebenen Kommunikationssystems gibt.

Diese Aufgabe wird ausgehend von dem im Oberbegriff des Anspruches 1 definierten Verfahren durch die kennzeichnenden Merkmale des Anspruchs 1 gelöst.

Weiterhin wird diese Aufgabe ausgehend von dem im Oberbegriff des Anspruches 17 definierten Computerprogrammerzeugnis durch die kennzeichnenden Merkmale des Anspruchs 17 gelöst.

Außerdem wird diese Aufgabe ausgehend von der im Oberbegriff des Anspruches 18 definierten Sende- und/oder Empfangseinheit durch die kennzeichnenden Merkmalen des Anspruchs 18 gelöst.

Ferner wird diese Aufgabe ausgehend von dem im Oberbegriff des Anspruches 20 definierten Kommunikationssystem durch die kennzeichnenden Merkmalen des Anspruchs 20 gelöst.

Die Unteransprüche definieren jeweils bevorzugte und vorteilhafte Ausführungsformen der vorliegenden Erfindung.

Ein erfindungsgemäßes Verfahren zur Übertragung von Daten von einer Nutzerapplikation eines Teilnehmers über ein Netzwerk zu einer Nutzerapplikation eines anderen Teilnehmers, bei dem die Übertragung durch Transaktionen und/oder den Daten zugefügte Informationselemente eines Transportprotokolls gesteuert wird, wobei die Informationselemente einen Feld-Namen und einen jeweiligen Feldwert umfassen, zeichnet sich erfindungsgemäß dadurch aus, daß das Transportprotokoll durch eine externe Anwendung bzw. einen externen Dienst genutzt wird, indem in dem Transportprotokoll eine zusätzliche Signalisierung zur Anbindung einer externen Nutzerapplikation verwendet wird. In einer besonders bevorzugten Ausführungsform der Erfindung wird als Transportprotokoll das MMS-Transportprotokoll verwendet, so daß diese neue Signalisierung zur Anbindung externer Nutzerapplikationen an die MMS-Einheiten es ermöglichen, daß die Einheiten des MMS als Server und/oder als Client von externen Anwendungen Daten in Multimedianachrichten entgegennehmen, transportieren und der Gegenstelle der externen Anwendung zur Verfügung stellen. Die externe Anwendung kann damit MMS als Transportmedium für die eigenen, aus Sicht von MMS beliebigen Inhalte nutzen. Ohne Ausschluss anderer Transportprotokolle wird die Erfindung nachfolgend nur anhand eines Multimedia Messaging Service MMS mit dementsprechenden Anpassungen dargestellt.

Zur Signalisierung werden in einer wesentlichen Weiterbildung der Erfindung neue Signalisierungselemente in Form von Header-Feldern verwendet. Eine MM besteht grundsätzlich aus einem Kopfteil und einem Datenteil. Der Kopfteil setzt sich aus definierten Kopf-Feldern zusammen und enthält allgemeine Informationen zur MM. Der Datenteil einer MM kann ein oder mehrere Elemente unterschiedlicher Datentypen und Datenformate in beliebiger Reihenfolge enthalten. Durch die vorgeschlagene Lösung wird in einfacher Weise eine strukturkonforme Anpassung und Funktionserweiterung des MMS erreicht.

In einer vorteilhaften Ausführungsform der Erfindung wird durch eine MMS-Nutzerapplikation eine Adresskonvertierung zur Anbindung einer externen Applikation vorgenommen, wobei die MMS-Nutzerapplikation eine Absenderadresse insbesondere durch eine eigene Adresse ersetzt.

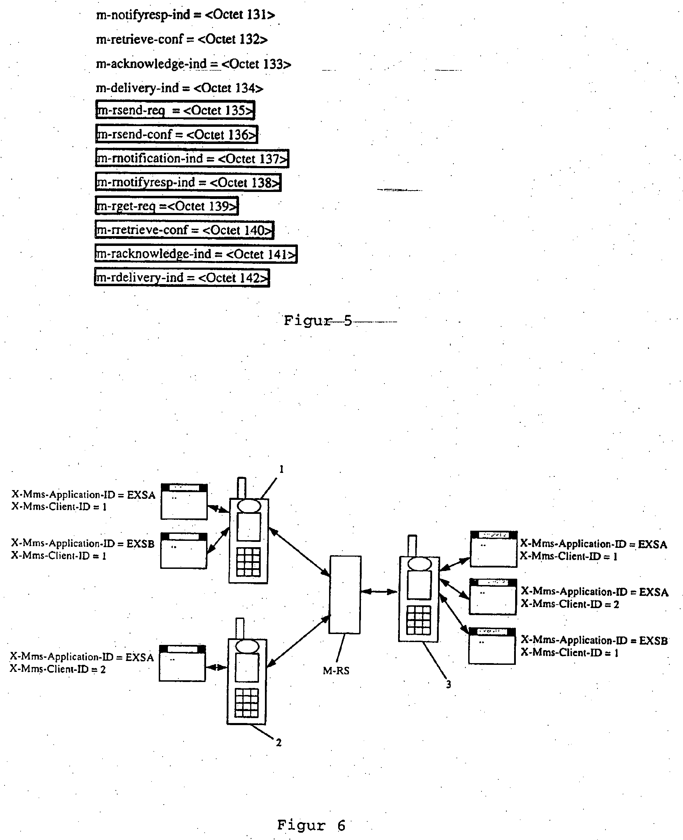

Bevorzugt wird eine Nachricht zu einem Nachrichtenfluss durch eine MMS-Nutzerapplikation anhand einer Transaktionskennung, einer Applikationskennung und/oder einer Kanalkennung zugeordnet. Hierauf wird unter Bezug auf ein Ausführungsbeispiel anhand der Abbildung von Figur 6 der Zeichnung noch im Detail eingegangen werden.

In einer Weiterbildung der Erfindung wird eine Nachricht an eine MMS-Nutzerapplikation adressiert. Darauf können aufbauend Inhalte einer Nachricht in vorteilhafter Weise auch an eine externe Nutzerapplikation weitergegeben werden. In einer vorteilhaften Ausführungsform der Erfindung kann dann weiter eine Nachricht von einer Netzwerkeinheit des externen Dienstes über MMS an eine MMS-Nutzerapplikation versandt werden.

Vorteilhafterweise kann in einer weiteren Ausführungsform der Erfindung eine Verbindung zwischen einer Adresse des Teilnehmers für den externen Dienst und einer Adresse des Teilnehmers für MMS in der Netzwerkeinheit des externen Dienstes mit dem Ziel gespeichert werden, Informationen für den Teilnehmer des externen Dienstes in einer MM verpackt an den Teilnehmer des MMS zu versenden.

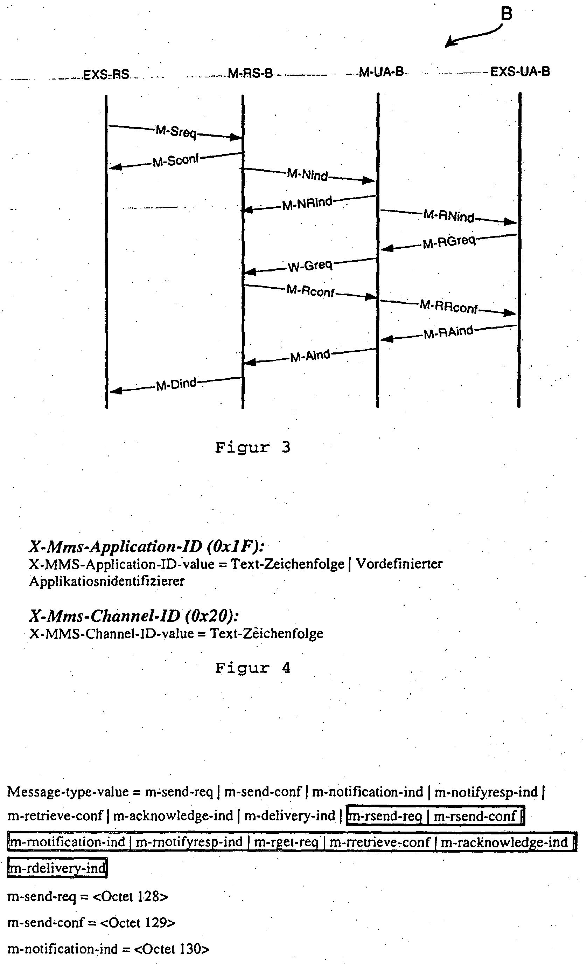

In einer bevorzugten Ausführungsform der Erfindung wird eine Signalisierung einer Zielanwendung durch ein Element X-Mms-Application-ID in einem Header einer Nachricht vorgenommen. Ferner wird eine Signalisierung eines Kanals durch ein Element X-Mms-Channel-ID in einem Header einer Nachricht vorgenommen, wobei diese erfindungsgemäß neuen Header-Felder unter Bezug auf ein Ausführungsbeispiel und die Zeichnung nachfolgend noch genau beschrieben wird, insbesondere in Zusammenhang mit der Darstellung von Figur 4 und der Beschreibung einer bevorzugten Ausführungsform.

In einer Weiterbildung der Erfindung werden zur Kommunikation zwischen der externen Nutzerapplikation des externen Dienstes (Anwendung) und der MMS-Nutzerapplikation neue Nachrichtentypen verwendet. Diese neuen Nachrichtentypen werden zusammen mit den erfindungsgemäß vorgeschlagenen Werten ebenfalls in Tabellen der Zeichnung unter Bezug auf eine Ausführungsform der Erfindung dargestellt.

Damit ist vorstehend insgesamt ein Verfahren vorgestellt worden, das aufgrund seiner Strukturkonformität hervorragend in ein bestehendes Protokoll eingefügt werden kann. Dementsprechend wird eine vorzugsweise mobile Sende- und/oder Empfangseinheit, wie beispielsweise ein Mobiltelefon mit Anschluss an diverse Dienste und/oder externe Kommunikationsmittel, unter voller Nutzung der dargestellten Vorteile aufgebaut.

Die vorliegende Erfindung wird nachfolgend unter Bezugnahme auf die beigefügte Zeichnung anhand bevorzugter Ausführungsbeispiele unter Nennung weiterer Vorteile erläutert.
- Figur 1: zeigt ein MMS Signalflussdiagramm bzw. Transaction Flow Diagramm nach dem WAP Standard mit einem üblichen Nachrichtenfluss in MMS;
- Figur 2: zeigt ein MMS Signalflussdiagramm analog der Darstellung von Figur 1 bei Anwendung einer Ausführungsform gemäß vorliegender Erfindung zur Übertragung einer externen Nachricht von einer externen Nutzerapplikation an einen externen Server;
- Figur 3: zeigt ein MMS Signalflussdiagramm analog der Abbildung von Figur 2 bei Anwendung erfindungsgemäß neuer Optionen auf eine Verbindung zwischen einem externen Server und einer empfangenden externen Nutzerapplikation als eine weitere Ausführungsform der Erfindung;
- Figur 4: stellt eine Codierung erfindungsgemäß neuer HaederFelder dar;
- Figur 5: stellt eine Codierung erfindungsgemäß zusätzlicher Typen von Benachrichtigungen bzw. Messages dar und
- Figur 6: zeigt ein Kommunikationssystem gemäß vorliegender Erfindung mit Übertragung von Informationen mehrerer externer Anwendungen unter Nutzung des MMS-Protokolls und des MMS-Nachrichtenflusses.

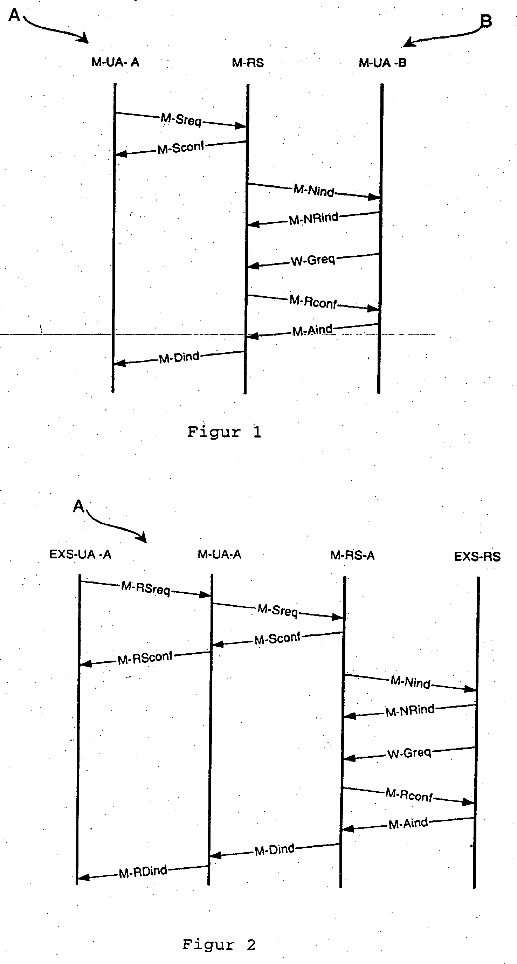

Elemente mit gleicher Funktion und Wirkungsweise sind in den Figuren 1 bis 6 durchgehend jeweils mit denselben Namen oder Bezugszeichen versehen.

Ferner sind der Zeichnung acht tabellarische Darstellungen beigefügt, die eine erfindungsgemäße Erweiterung bestehender Header-Felder, Feldnamen, Codierungen und Benachrichtigungen etc. in Form doppelt umrahmter Zeilen offenbaren. Dies sind im Einzelnen:

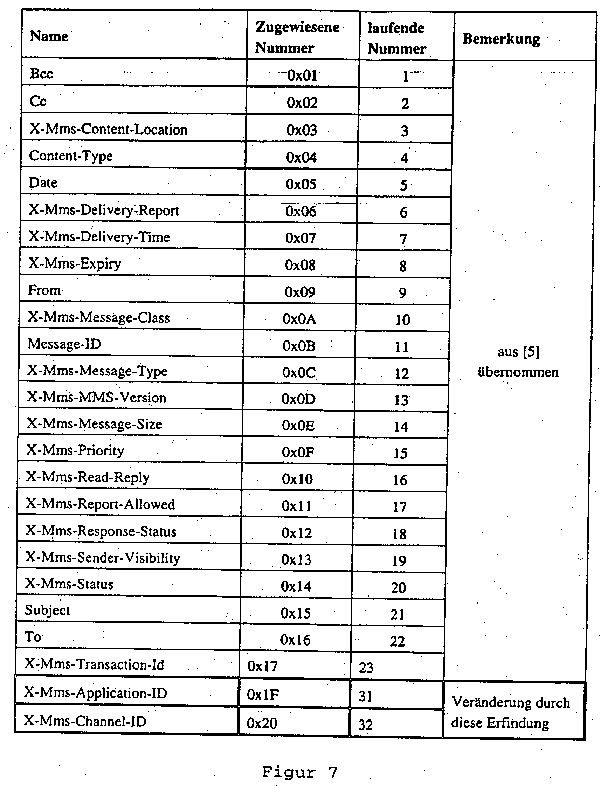

- Figur 7: mit einer Zuweisung binärer Codes zu den Feldnamen unter Verwendung der Quelle [2] 7.3;

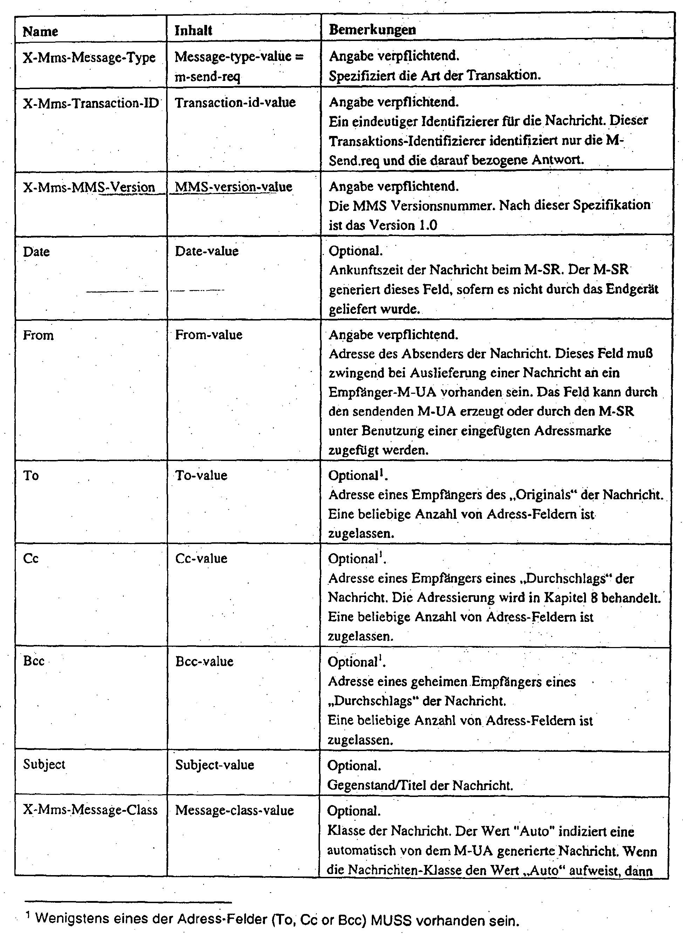

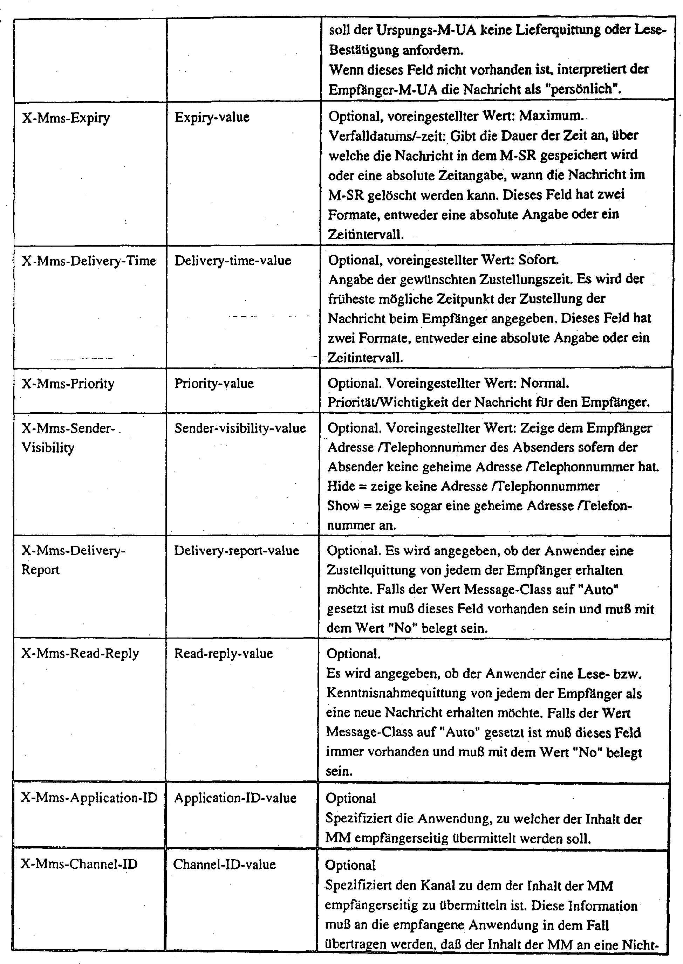

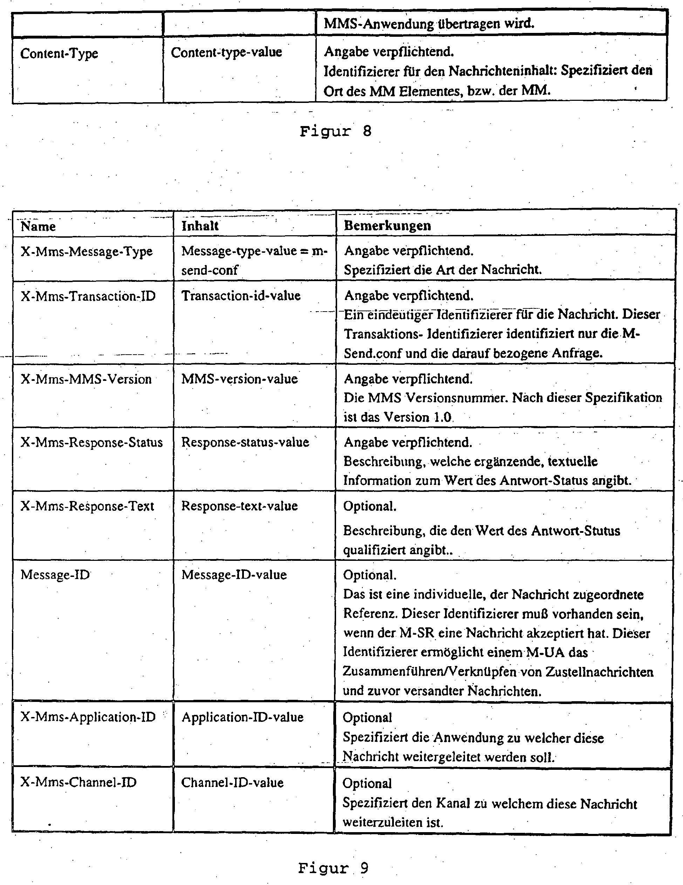

- Figur 8: mit Header-Felder der WAP Message M-Send.req unter Verwendung der Quelle: [2]: 6.1
- Figur 9: mit einer Darstellung von Inhalten der WAP Nachricht M-Send.conf unter Verwendung der Quelle [2]

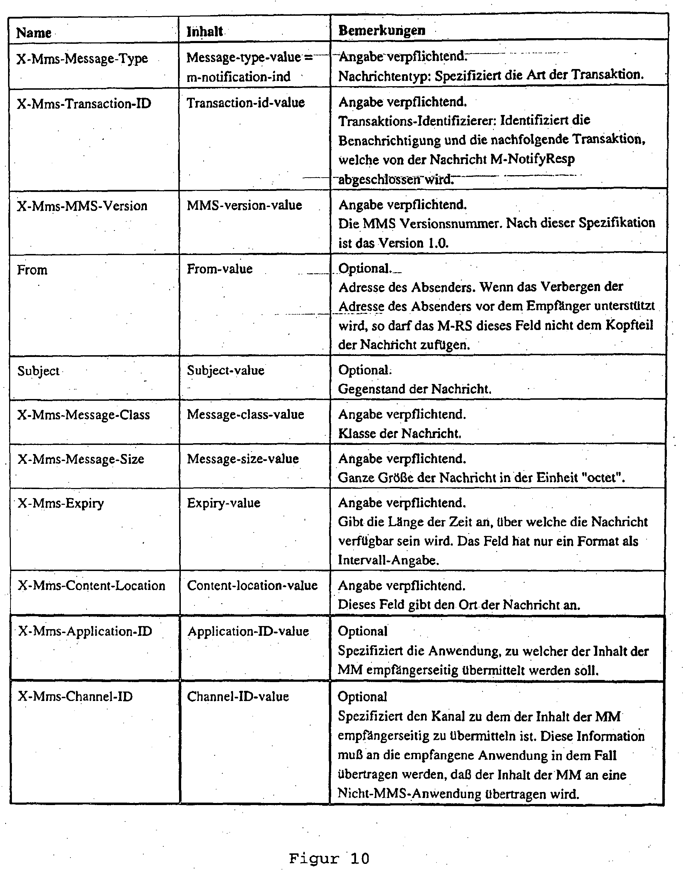

- Figur 10: mit einer Darstellung von Inhalten der WAP-Nachricht M-Notification.ind unter Verwendung der Quelle: [2]: 6.2

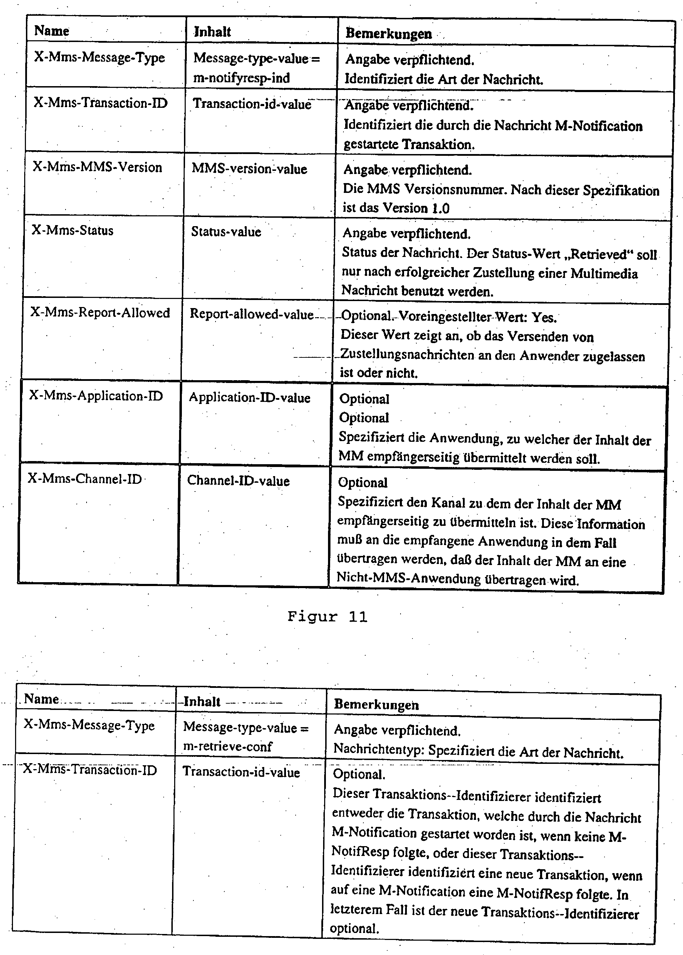

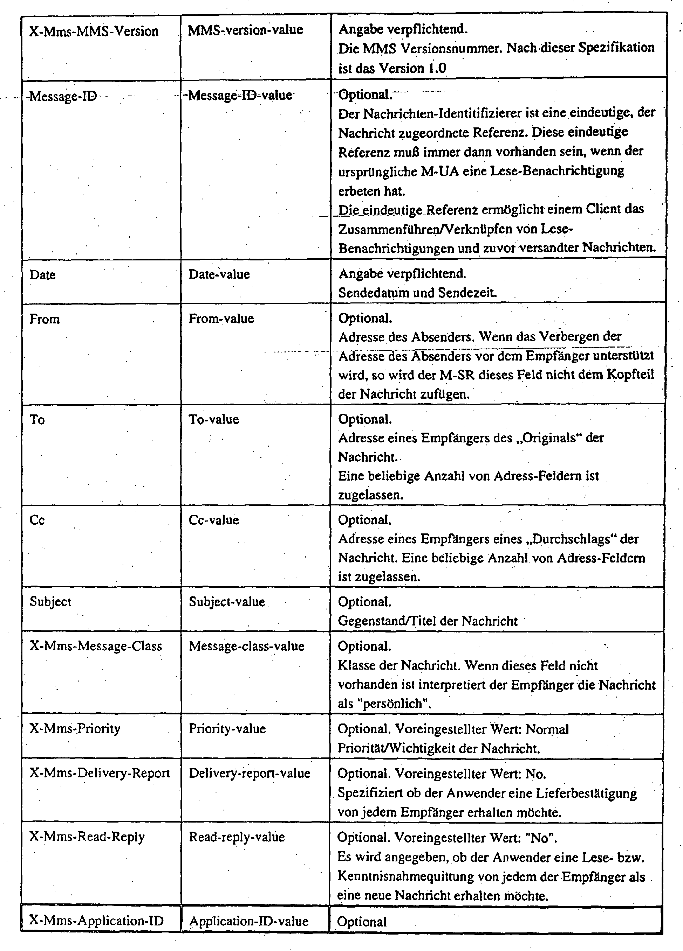

- Figur 11: mit einer Darstellung von Inhalten der WAP-Nachricht M-NotifyResp.ind unter Verwendung der Quelle [2].

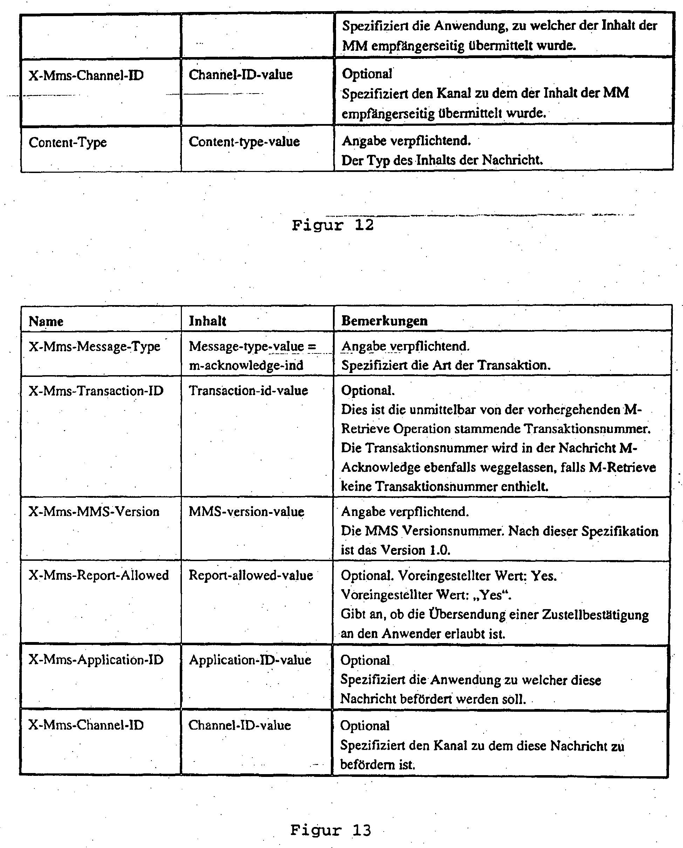

- Figur 12: mit einer Darstellung der Header-Felder der WAP Message M-Retrieve.conf unter Verwendung der Quelle [2]: 6.3;
- Figur 13: mit einer Darstellung von Inhalten der M-Acknowledge.ind WAP message unter Verwendung der Quelle [2];

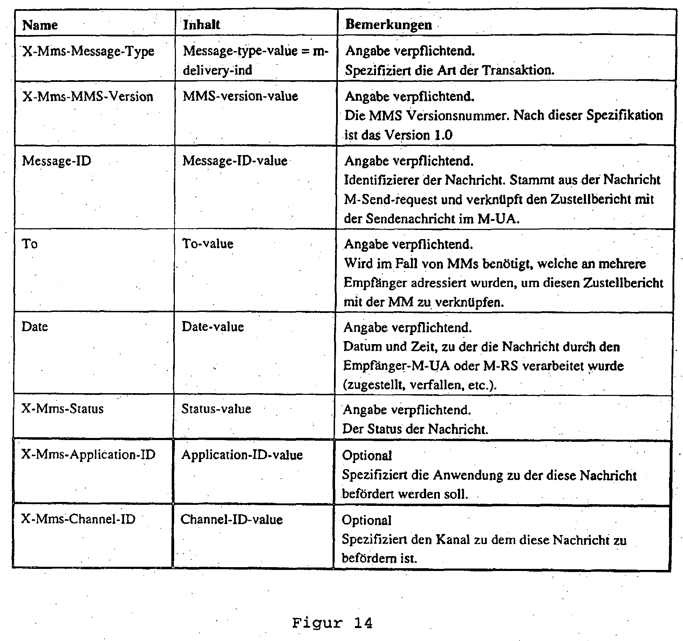

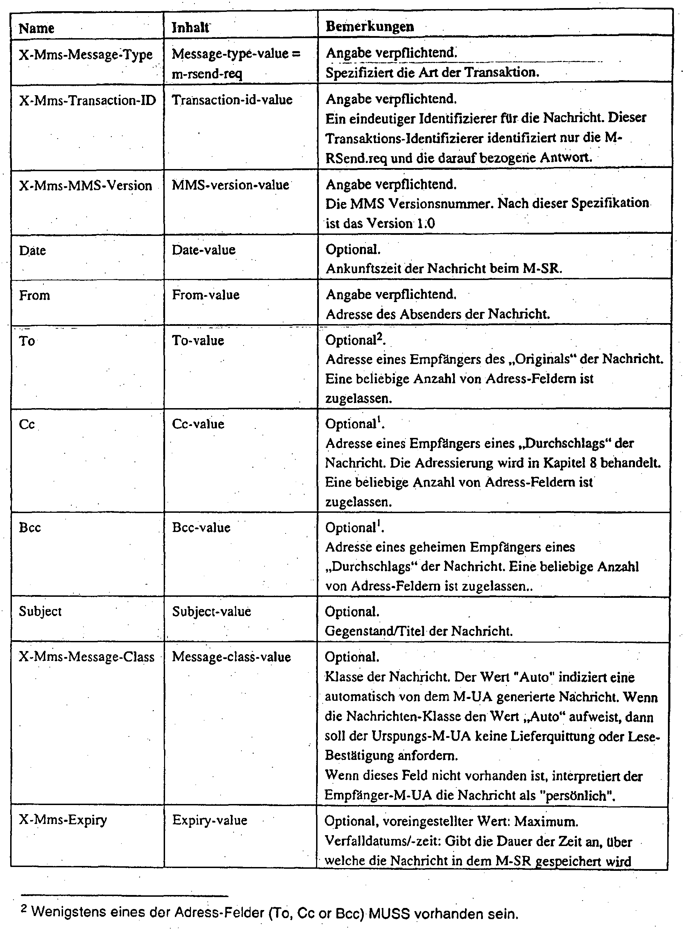

- Figur 14: mit einer Darstellung von Inhalten der M-Delivery.ind WAP message unter Verwendung der Quelle [2];

Ferner sind der Zeichnung acht weitere tabellarische Darstellungen beigefügt, welche die erfindungsgemäß neuen Nachrichten darstellen. Diese verwenden sowohl bestehende Header-Felder, Feldnamen, Codierungen und Benachrichtigungen etc. in Anlehnung an Quelle [2], als auch die o.g. erfindungsgemäße Erweiterung, welche wiederum in Form doppelt umrahmter Zeilen offenbart sind. Dies sind im Einzelnen:

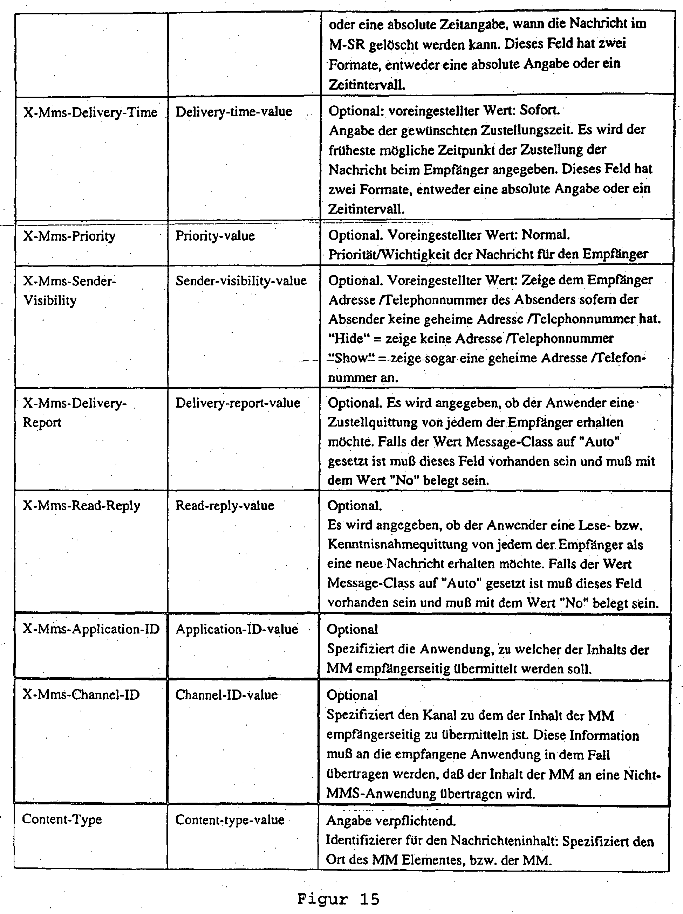

- Figur 15: mit einer Darstellung der Header-Felder der erfindungsgemäß neuen Nachricht M-RSend.req;

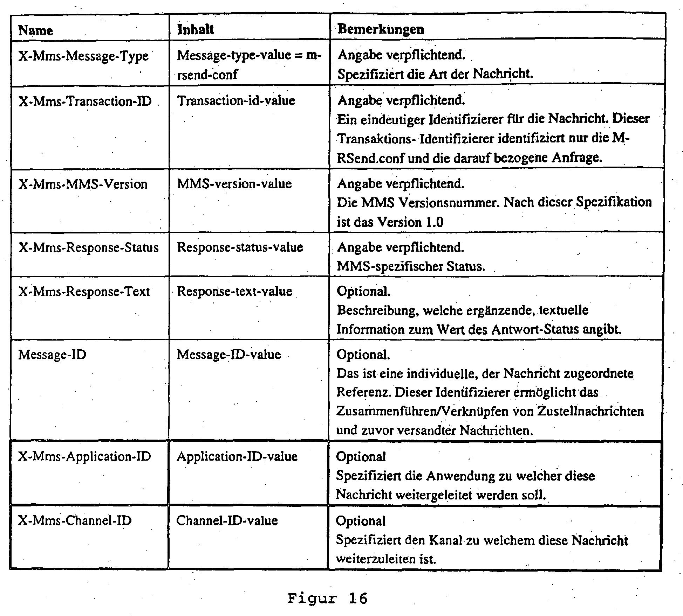

- Figur 16: mit einer Darstellung der erfindungsgemäß neuen Nachricht M-RSend.conf;

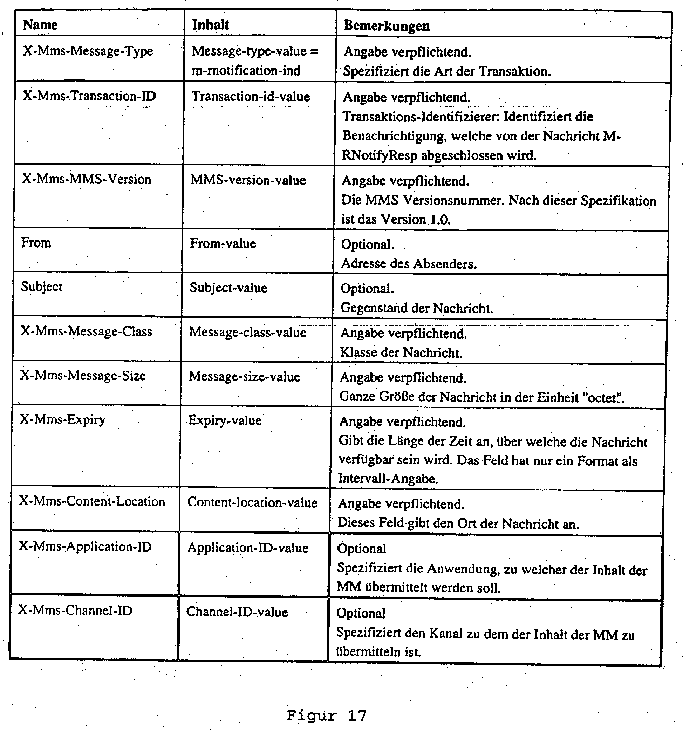

- Figur 17: mit einer Darstellung von Inhalten der Header-Felder der erfindungsgemäß neuen Message M-RNotification.ind;

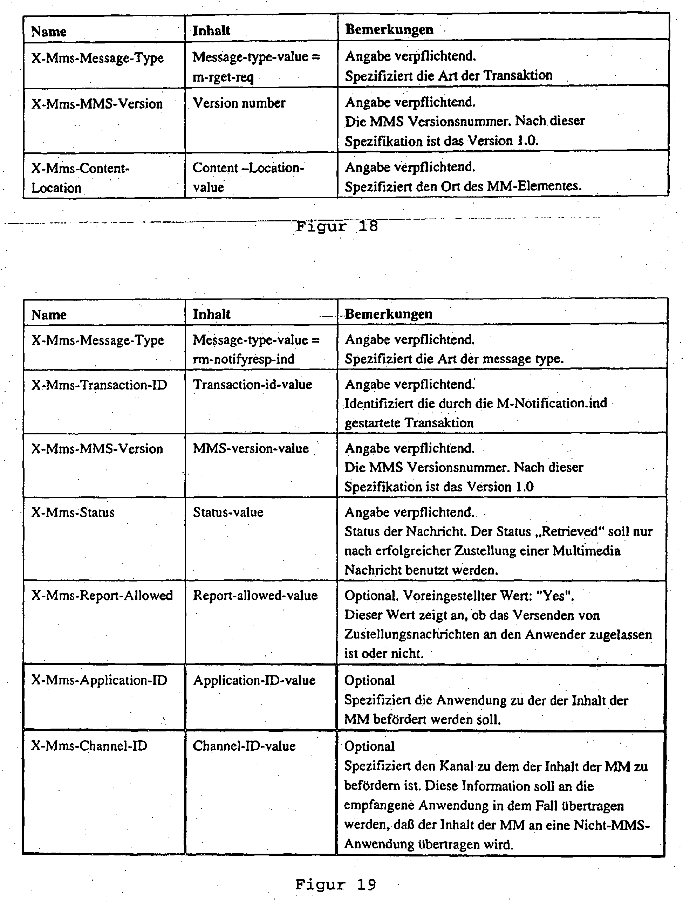

- Figur 18: mit einer Darstellung der erfindungsgemäß neuen Nachricht M-RGet.req;

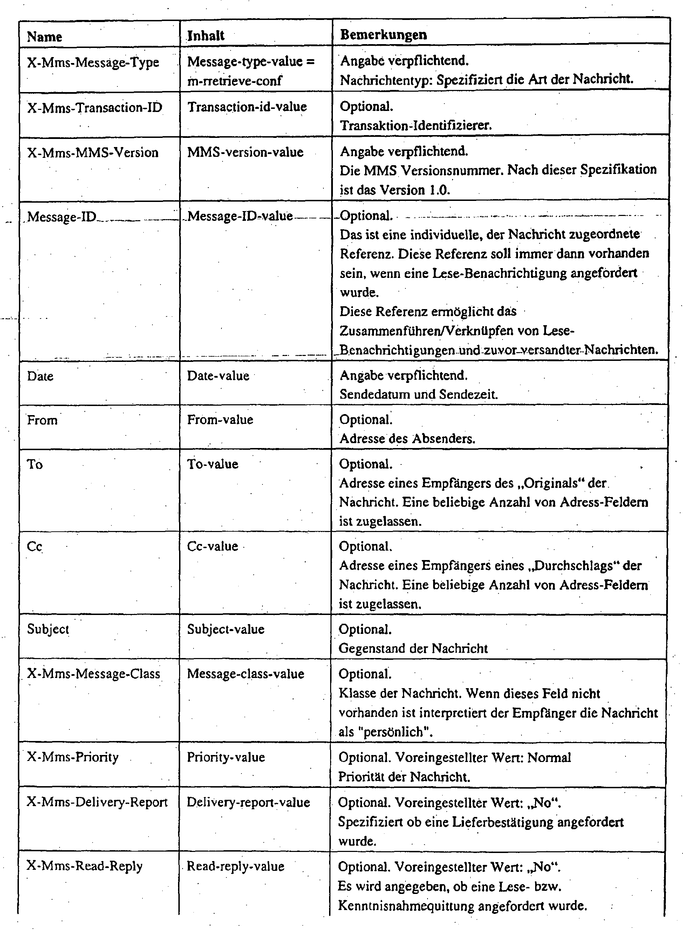

- Figur 19: mit einer Darstellung der erfindungsgemäß neuen Nachricht M-RNotifyResp.ind;

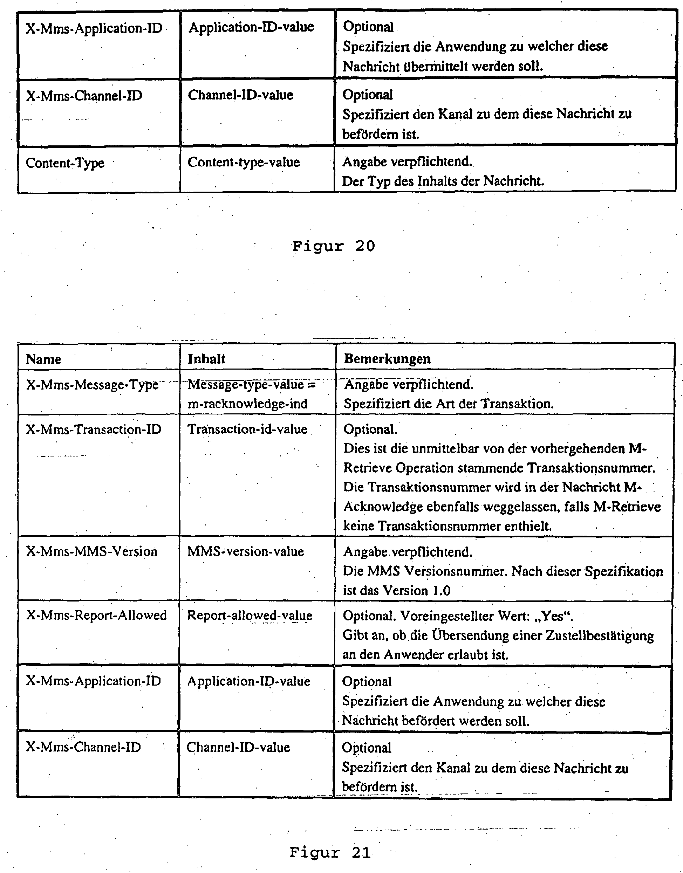

- Figur 20: mit einer Darstellung der Header-Felder der erfindungsgemäß neuen Nachricht M-RRetrieve.conf;
- Figur 21: mit einer Darstellung der erfindungsgemäß neuen Nachricht M-RAcknowledge.ind message und

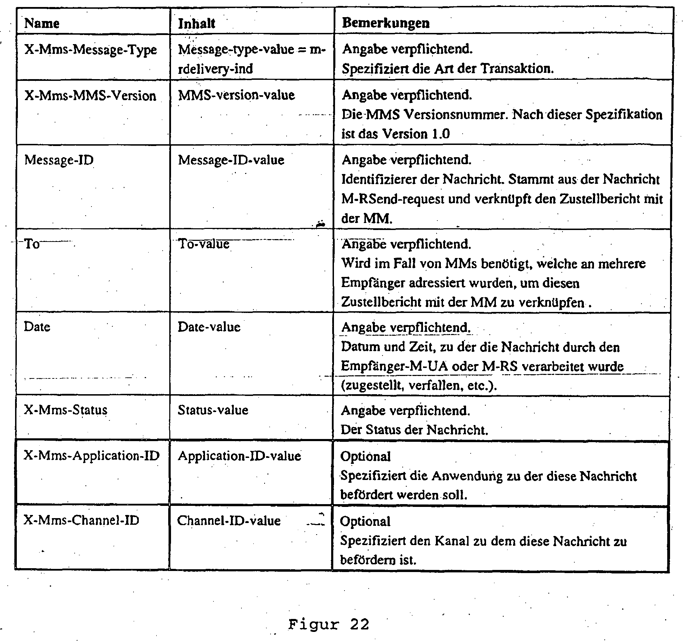

- Figur 22: mit einer Darstellung der erfindungsgemäß neuen Nachricht M-RDelivery.ind.

Die Abbildung von Figur 1 zeigt ein Nachrichtenflußdiagramm nach heutigem Stand der Technik gemäß [4] als schematische Abbildung einer Datenübertragung mit den jeweils zugeordneten Sendungen bzw. Benachrichtigungen gemäß dem Wireless application protocoll bzw. WAP-Standard. Das im Folgenden zugrunde gelegte Kommunikationssystem umfaßt mindestens drei Ebenen. In dem Nachrichtenflußdiagramm ist der Austausch der WAP Nachrichten zwischen drei beteiligten Instanzen MMS- Nutzerapplikation M-UA A bei Teilnehmer A, MMS- Verbindungseinheit M-RS und MMS-Nutzerapplikation M-UA B bei Teilnehmer B bei Versand bzw. Empfang einer MM dargestellt. Unter MMS-Nutzerapplikation versteht man eine Anwendung auf einem Mobilfunkgerät oder auf einem an ein Mobilfunkgerät angeschlossenen Gerät, z.B. Laptop oder ein Personal Digital Assistent PDA, welche die MMS-Funktionalität realisiert. Eine MMS-Verbindungseinheit ist ein Netzelement beim MMS Dienstanbieter, das den MMS-Nutzerapplikationen eine Kommunikation über das Netzwerk ermöglicht. Die MMS- Verbindungseinheit kann auch aus mehreren Elementen bestehen, beispielsweise durch das Auftreten mehrerer Provider, verschiedener physikalischer Übertragungsstrecken und/oder Übertragungsstandards, so daß das dargestellte dreischichtige Modell nur eine abstrahierte Grundform des Kommunikationssystems darstellt.

Zwischen den beteiligten Elementen werden die Informationen mit Nachrichten ausgetauscht, die in dem Nachrichtenflussdiagramm in Figur 1 mit Pfeilen dargestellt sind. Eine Nachricht besteht grundsätzlich aus einem Kopf bzw. Header und optional aus einem Datenteil bzw. Body, der die Multimediaobjekte enthält. Der Nachrichtenfluss umfasst nach dem Stand der Technik die folgenden Nachrichten:
- M-Sreq: MMS-Sendeanfrage, wird vom sendenden M-UA A an die MMS Verbindungseinheit M-RS geschickt, um diese zur Weiterleitung des Inhalts der MM an den oder die Empfänger zu veranlassen, siehe tabellarische Darstellung von Figur 8.
- M-Sconf: MMS-Sendebestätigung, wird von der MMS-Verbindungseinheit M-RS an die sendende MMS- Nutzerapplikation gesendet, um der sendenden MMS-Nutzerapplikation den Status der Sendeanfrage zu übermitteln, siehe tabellarische Darstellung von Figur 9.
- M-Nind: MMS-Empfängerbenachrichtigung, dient der Benachrichtigung der adressierten MMS-Nutzerapplikation, daß eine Multimedianachricht zur Zustellung bereit liegt, siehe tabellarische Darstellung von Figur 10.
- M-Nrind: MMS-Empfängerbenachrichtigungsbestätigung, wird von der adressierten MMS-Nutzerapplikation an die MMS-Verbindungseinheit geschickt, um den Erhalt der MMS- Empfängerbenachrichtigung zu bestätigen, siehe tabellarische Darstellung von Figur 11.
- W-Greq: MMS-Zustellanfrage, wird von der adressierten MMS-Nutzerapplikation an die MMS-Verbindungseinheit gesendet, um das Zustellen der Multimedianachricht zu veranlassen.
- M-Rconf: MMS-Zustellnachricht, wird von der MMS- Verbindungseinheit an die adressierte MMS-Nutzerapplikation gesendet, um die Multimedianachricht zur MMS-Nutzerapplikation zu übertragen, siehe tabellarische Darstellung von Figur 12.
- M-Aind: MMS-Zustellungsbestätigung, wird von der MMS-Nutzerapplikation an die MMS-Verbindungseinheit gesendet, um den Status der Zustellung der Multimedianachricht an die MMS- Nutzerapplikation zu melden, siehe tabellarische Darstellung von Figur 13.
- M-Dind: MMS-Zustellstatusbenachrichtigung, wird von der MMS-Verbindungseinheit an die sendende MMS- Nutzerapplikation gesendet und dient der Benachrichtigung der sendenden MMS- Nutzerapplikation, über den Status der zugestellten Nachricht, siehe tabellarische Darstellung von Figur 14.

Die Verweise auf die entsprechende Tabelle der Zeichnung beziehen sich selbstverständlich nur auf die nicht durch doppelte Umrandung speziell gekennzeichneten neuen Tabellenzeilen, auf die nachfolgend noch gesondert eingegangen wird.

Nach dem Stand der Technik bietet der Multimedia Messaging Service MMS keine Möglichkeit, Daten so zu transportieren, daß die empfangende MMS- Nutzerapplikation die Daten definiert an eine externe Applikation weiterreicht. Es ist nur möglich, den Typ der in einer Nachricht enthaltenen Daten zu signalisieren. Damit kann die MMS-Nutzerapplikation die Daten mit Hilfe von geeigneten Decodern decodieren und ausgeben. Die Behandlung der Nachricht und aller enthaltenen Daten bleibt dabei stets in der Verantwortung der MMS- Nutzerapplikation. Ein Weiterreichen der Daten an eine externe Applikation ist bisher explizit nicht möglich. Weiterhin ist auch von einer externen Applikation keine direkte Beeinflussung des Empfangs und des Sendens von Multimedianachrichten durch die MMS- Nutzerapplikation möglich.

Erfindungsgemäß werden die vorstehend genannten Probleme durch die Einführung neuer Signalisierungselemente in das Protokoll des Multimedia Messaging Service MMS in strukturverträglicher Form gelöst. Eine Multimedia Nachricht MM besteht grundsätzlich aus einem Kopfteil und einem Datenteil. Der Kopfteil bzw. Header setzt sich aus definierten Kopf-Feldern zusammen und enthält allgemeine Informationen zur MM. Der Datenteil bzw. Body einer MM kann ein oder mehrere Elemente unterschiedlicher Datentypen und Datenformate in beliebiger Reihenfolge enthalten. Es werden in der MMS- Spezifikation zur Codierung der Nachrichten des MMS [5] erfindungsgemäß zwei neue Signalisierungselemente in Form von Header-Feldern eingeführt, namentlich sind das die Felder X-Mms-Application-ID und X-Mms-Channel-ID, siehe Figur 4. Eine Codierung erfolgt dann hinsichtlich des Feld-Namens und eines jeweiligen Feldwertes. Mit diesen beiden Elementen kann der Inhalt einer Multimedianachricht gekennzeichnet und somit von der empfangenden MMS-Nutzerapplikation an eine externe Applikation vermittelt, d.h. weitergereicht, werden.

Zur Kennzeichnung des Inhaltes einer Multinmedia Message bestehen prinzipiell zwei Möglichkeiten:
- Der gesamte Inhalt der MM wird zur Weiterleitung an eine externe Applikation gekennzeichnet. Dazu wird das Header-Feld X-Mms-Application-ID und optional auch das Header-Feld X-Mms-Channel-ID in den Header der MM eingefügt. Der Content-type der MM kann dann gemäß [6] als "application/*" gekennzeichnet werden, um zu signalisieren, daß der Inhalt nicht von der MMS-Nutzerapplikation zu bearbeiten ist. Der Inhalt der Multimedianachricht besteht dann definitionsgemäß aus einem Datenelement, das von der MMS-Nutzerapplikation komplett und unverändert an die externe Applikation weitergereicht wird. Der interne Aufbau dieses Datenelements wird von der externen Applikation bestimmt. Darin ist eine Unterteilung in mehrere Objekte und auch die Zuordnung der Objekte zu unterschiedlichen logischen Kanälen für die Applikation realisierbar, was aber außerhalb der Definition des MMS liegt.
- Der Inhalt einer MM ist per Header-Feld "Content-type" als "application/vnd.wap.multipart-mixed" gekennzeichnet, enthält demnach mehrere Objekte beliebigen Typs. Die Application-ID wird im Header des jeweiligen Body-Parts entsprechend der adressierten Applikation als Header-Feld codiert. Die MMS-Nutzerapplikation kann nach Öffnen der MM die einzelnen Teile der MM an die entsprechenden externen Applikationen weiterleiten. Die Channel-ID kann ebenso je Body-Part der MM separat als Header-Feld codiert werden, wodurch eine MM auch Inhalte für verschiedene Applikationen und/oder für verschiedene Kanäle enthalten kann.

Die zuletzt genannte Variante ermöglicht es zwar, verschiedene logische Kanäle und sogar auch verschiedene Applikationen mit einer Multimedianachricht zu bedienen, realisiert die Idee der Erfindung aber nur in eingeschränktem Maße, da den angesprochenen Applikationen keine vollständige Kontrolle über den Nachrichtenfluss gegeben werden kann. Daher stellt die zuerst genannte Variante eine gute Basis für eine kompromisslose Realisierung eines nachfolgend in mehreren Ausführungsformen dargestellten Verfahrens dar und wird unter Bezugnahme auf Ausführungsbeispiele ausführlicher beschrieben. Durch ein erfindungsgemäßes Verfahren wird die Möglichkeit eröffnet, den Multimedia Messaging Service MMS und die dort spezifizierten Nachrichtentransaktionen, die Codierungsmethoden für Header-Felder und für Elemente des Datenteils sowie die Mechanismen für die Adressierung, für finanzielle Transaktionen bzw. eine Abrechnung eines Dienstes usw. auch für externe Anwendungen nutzbar zu machen. Ein besonders interessantes Beispiel für eine externe Anwendung ist das s.g. "Instant Messaging", d.h. der Versand von Nachrichten mit unmittelbarer Zustellung, der üblicherweise an die Verfügbarkeit des Empfängers gekoppelt ist. Hier könnte bei Umsetzung der beschriebenen Möglichkeiten eine Instant Messaging Applikation die Nachrichten per MMS senden und empfangen.

In dem nun folgenden Ausführungsbeispiel, das auf den durch das WAP-Forum definierten Codierungen der im MMS ausgetauschten Nachrichten basiert, wird die Möglichkeit einer Kennzeichnung mit der X-MMS-Application-ID und mit dem Feld X-Mms-Channel-ID im Kopf der Multimedia Nachricht MM demonstriert. Ein wesentlicher Unterschied zwischen dem üblichen Nachrichtenfluß im MMS und dem für einen externen Dienst besteht darin, daß die Nutzerapplikation des externen Dienstes auch über einen Server des entsprechenden Dienstes mit dem Empfänger des externen Dienstes kommunizieren kann. Zusätzlich zu den üblichen Stationen des Nachrichtenflusses im MMS, MMS- Nutzerapplikation bei Teilnehmer A -> MMS- Verbindungseinheit → MMS- Nutzerapplikation bei Teilnehmer B, M-UA-A → M-RS → M-UA-B; siehe Figur 1 kann hier die Zwischenschaltung eines Servers des anderen Dienstes erforderlich sein, oder es ist auch die Aufteilung des Übertragungswegs zwischen Sender und Server und Server und Empfänger möglich. Auf den Strecken können dann unterschiedliche Transportprotokolle verwendet werden. Wird für beide Strecken MMS als Transportprotokoll gewählt, sieht der Nachrichtenfluss folgendermaßen aus: Externe Nutzerapplikation bei Teilnehmer A → MMS- Nutzerapplikation bei Teilnehmer A → MMS-Verbindungseinheit bei Teilnehmer A → Externe Verbindungseinheit EXS-UA-A → M-UA-A → M-RS-A → EXS-RS, siehe Figur 2;
Externe Verbindungseinheit → MMS-Verbindungseinheit bei Teilnehmer B→ MMS-Nutzerapplikation bei Teilnehmer B → Externe Nutzerapplikation bei Teilnehmer B EXS-RS -> M-RS-B -> M-UA-B -> EXS-UA-B, siehe Figur 3.

Ohne diese optionale Zwischenschaltung eines Servers des anderen Dienstes sieht der Nachrichtenfluss folgendermaßen aus: Externe Nutzerapplikation bei Teilnehmer A -> MMS- Nutzerapplikation bei Teilnehmer A -> MMS-Verbindungseinheit bei Teilnehmer A -> MMS-Verbindungseinheit bei Teilnehmer B→ MMS-Nutzerapplikation bei Teilnehmer B → Externe Nutzerapplikation bei Teilnehmer B EXS-UA-A → M-UA-A → M-RS-A → M-RS-B → M-UA-B → EXS-UA-B, hier nicht dargestellt, aber vergleiche Figur 6.

Zur Kommunikation zwischen der externen Nutzerapplikation und der MMS-Nutzerapplikation werden erfindungsgemäß neue Nachrichtentypen eingeführt, die im Wesentlichen den originalen MMS-Nachrichtentypen entsprechen, jedoch zwischen der externen Nutzerapplikation EXS-UA und der MMS-Nutzerapplikation M-UA ausgetauscht werden. Die folgende Liste gibt einen Überblick:
- M-RSreq: MMS-Fernsendeanfrage, wird von der externen Nutzerapplikation an die MMS-Nutzerapplikation, gesendet, um diese zum Senden eines M-Sreq zu veranlassen, siehe Figur 2 und tabellarische Darstellung von Figur 15.
- M-RSconf: MMS-Fernsendebestätigung, wird von der MMS- Nutzerapplikation an die externe Nutzerapplikation gesendet, um die Statusmeldungen aus der zuvor empfangenen M-Sconf an die externe Nutzerapplikation weiterzureichen, siehe Figur 2 und Figur 16.
- M-RDind: MMS-Fernzustellstatusbenachrichtigung, wird von der MMS-Nutzerapplikation an die externe Nutzerapplikation gesendet, um die Informationen der zuvor empfangenen MMS-Zustellstatusbenachrichtigung weiterzureichen, siehe Figur 2 und Figur 22.
- M-RNind: MMS-Fernempfängerbenachrichtigung, dient der Benachrichtigung der externen Nutzerapplikation. Die MMS-Nutzerapplikation leitet darin die Informationen der MMS-Empfängerbenachrichtigung an die externe Nutzerapplikation weiter, siehe Figur 3 und Figur 17.
- M-RNRind: MMS-Fernempfängerbenachrichtigungsbestätigung, wird von der externen Nutzerapplikation an die MMS- Nutzerapplikation gesendet, um den Erhalt der MMS- Fernempfängerbenachrichtigung zu bestätigen, siehe Figur 3 und Figur 19.
- M-RGreq: MMS-Fernzustellanfrage, wird von der externen Nutzerapplikation an die MMS-Nutzerapplikation gesendet, um das Versenden der MMS Zustellanfrage zu veranlassen, siehe Figur 3 und Figur 18.
- M-RRconf: MMS-Fernzustellnachricht, wird von der MMS-Nutzerapplikation an die externe Nutzerapplikation gesendet, um die mit der MMS-Zustellnachricht erhaltenen Inhalte an die externe Nutzerapplikation weiterzureichen, siehe Figur 3 und Figur 20.
- M-RAind: MMS-Fernzustellungsbestätigung, wird von der externen Nutzerapplikation an die MMS- Nutzerapplikation gesendet, um den Status der Zustellung der Multimedianachricht an die externe Nutzerapplikation der MMS-Nutzerapplikation zu melden, damit die Informationen in der MMS-Zustellungsbestätigung an die MMS- Verbindungseinheit weitergereicht werden können, siehe Figur 3 und Figur 21.

Diese Kommunikation zwischen der externen Nutzerapplikation und der MMS-Nutzerapplikation kann erfindungsgemäß insbesondere asynchron von der Kommunikation zwischen der MMS-Nutzerapplikation und der MMS-Verbindungseinheit getrennt sein. Dies sei ohne Beschränkung der Allgemeinheit im Folgenden am Beispiel der Nachricht M-Rsreq erläutert. Nach dem Senden einer ersten MMS-Fernsendeanfrage M-Rsreq, kann eine externe Nutzerapplikation bereits eine zweite MMS-Fernsendeanfrage M-RSreq an die MMS-Nutzerapplikation senden, bevor diese MMS-Nutzerapplikation das Senden einer ersten MMS-Sendeanfrage M-Sreq unternommen hat. Auch können mehrere MMS-Fernsendeanfragen M-Rsreq von der MMS-Nutzerapplikation in einer einzigen MMS-Sendeanfrage M-Sreq zusammengefasst sein und/oder eine MMS-Fernsendeanfragen M-Rsreq von der MMS-Nutzerapplikation auf mehrere MMS-Sendeanfragen M-Sreq verteilt werden.

Soweit sich die vorstehenden Verweise auf die Tabellen der Zeichnung mit bereits bekannten Nachrichten bzw. Benachrichtigungen, Header-Felder etc. beziehen, so sind nun erfindungsgemäß vorgenommene und durch eine doppelte Umrandung gekennzeichnete Zeilen mit eingeschlossen. Teilweise wird aber auch auf ganz neue Benachrichtigungen verwiesen, die in ihrer Struktur dem bisherigen Standard angepasst sind.

Beispielhaft verschickt im Folgenden eine externe Nutzerapplikation EXS-UA-A eines externen Dienstes bei Teilnehmer A, EXSA, eine Instant Message IM an eine externe Nutzerapplikation EXS-UA-B eines externen Dienstes bei Teilnehmer B, EXSB, über MMS. Dies kann erfindungsgemäß über die beiden Teilstrecken geschehen, wie sie in den Figuren 2 und 3 beschrieben sind - vergleiche auch Figur 6.

Auf der ersten Teilstrecke (s. Figur 2) verschickt im Folgenden die externe Nutzerapplikation EXS-UA-A eines externen Dienstes bei Teilnehmer A, EXSA, eine Instant Message IM, indem sie der MMS-Nutzerapplikation M-UA A die Instant Message IM als Inhalt der Nachricht M-RSreq übergibt, und diese mit dem Versand der Instant Message IM an einen externen Server EXS-RS beauftragt. Die Instant Message IM wird unabhängig von MMS codiert und an EXS-UA-B@EXSA, den Empfänger für diese IM, adressiert. Die Instant Message IM wird dann als Teil der Nachricht M-RSreq an die sendende MMS-Nutzerapplikation M-UA A geschickt, wobei die Nachricht M-RSreq als Empfängeradresse die Adresse EXSA-RS@MMSA der externen Verbindungseinheit EXS-RS enthält, die der Empfänger der MM auf der ersten Teilstrecke der gesamten Nachrichtenübermittlung ist. Die MM erhält die Kennzeichnung X-Mms-Application-ID = EXSA. Optional kann auch eine Kanal-Kennung bzw. Kanal-ID X-Mms-Channel-ID von der externen Nutzerapplikation vergeben und in der MM codiert werden. Die Adresse des Empfängers EXS-UA-B@EXSA ist in der Instant Message IM enthalten und für den MMS nicht sichtbar. Der komplette MMS Nachrichtenfluß dieser ersten Teilstrecke erfolgt zwischen den Einheiten MMS- Nutzerapplikation M-UA A, MMS Verbindungseinheit M-RS A und externer Verbindungseinheit EXS-RS, siehe Figur 2.

Die folgenden Messages werden zwischen den Einheiten übertragen, wobei die jeweiligen Benachrichtigungen nachfolgend auszugsweise in textueller Form wiedergegeben werden.

Eine Multimedia Nachricht MM wird an den Adressaten verschickt:

### M-RSreq (EXS-UA-A → M-UA-A):

X-Mms-Message-Type: m-rsend-req
X-Mms-Transaction-ID: TRANSACTION-ID#1
X-Mms-Version: 1.0
Date: Wed, 16 May 2001 10:20:00 +0100
From: EXS-UA-A@MMSA
To: EXS-RS@MMSA
Subject: Instant Message des EXSA
X-Mms-Application-ID: EXSA
X-Mms-Channel-ID: 1
Content-Type: Application/*
nEntries: 1
HeadersLen: XX
DataLen: XX
Content-Type: Application/*
< ... Hier werden die Daten der anderen Applikation eingefügt .... >

In der Nachricht sind im Kopf die Felder X-Mms-Application-ID und X-Mms-Channel-ID eingefügt, damit die empfangende MMS-Nutzerapplikation bei Teilnehmer B - nach Durchlaufen der zweiten Teilstrecke, welche weiter unten beschrieben ist - erkennen kann, daß der Inhalt der MM an eine weitere Applikation weitergeleitet werden muß. Als Absender der obigen Nachricht M-RSreq fungiert die externe Nutzerapplikation EXS-UA-A, Empfänger ist der externe Server EXS-RS, der somit als empfangender MMS-UA fungiert und daher eine Teilnehmeradresse EXS-RS@MMSA des MMS von einem Dienstanbieter, in diesem Fall dem Dienstanbieter des Teilnehmers A, benötigt.

Anschließend wird die Nachricht ohne wesentliche Änderungen von der MMS Nutzerapplikation als M-Sreq weitergeleitet. Lediglich der Nachrichtentyp und die Adresse des Absenders müssen entsprechend angepasst werden: Der Nachrichtentyp m-rsend-req wird zu m-send-req und die Adresse des Absenders EXS-UA-A wird zu M-UA-A, da i.d.R. nur diese dem MMS-System bekannt ist.

M-Sreq (M-UA A → M-RS A):
X-Mms-Message-Type: m-send-req
X-Mms-Transaction-ID: TRANSACTION-ID#1
X-Mms-Version: 1.0
Date: Wed, 16 May 2001 10:20:00 +0100
From: M-UA-A@MMSA
To: EXS-RS@MMSA
Subject: Instant Message des EXSA
X-Mms-Application-ID: EXSA
X-Mms-Channel-ID: 1
Content-Type: Application/*
nEntries: 1
HeadersLen: XX
DataLen: XX
Content-Type: Application/*
< ... Hier werden die Daten der anderen Applikation eingefügt ... >

Nach dem Stand der Technik wird die Sendeanfrage des MMS User Agent M-UA A mit einer Nachricht M-Sconf vom M-RS quittiert. Im WAP-Standard wird die Sendeanfrage als M-Send.req bezeichnet, die Quittungsbenachrichtigung als M-Send.conf.

M-Sconf (M-RS-A → M-UA-A):
X-Mms-Message-Type: m-send-conf
X-Mms-Transaction-ID: TRANSACTION-ID#1
X-Mms-Version: 1.0
X-Mms-Response-Status: ok
Message-ID: MESSAGE-ID#1
X-Mms-Application-ID: EXSA
X-Mms-Channel-ID: 1

In der Nachricht ist nach dem Stand der Technik neben der originalen Transaction-ID auch eine vom M-RS-A vergebene Message-ID enthalten. Die Information, welche Applikation und welcher Kanal angesprochen werden soll, ist ebenfalls codiert. Der M-UA-A kann nun die Statusinformationen über die MM aufgrund der Application-ID und/oder der Channel-ID an die richtige Applikation weiterleiten. Dazu wird die Nachricht M-RSconf, die dann den Response-Status enthält, codiert und vom M-UA-A an die externe Nutzerapplikation EXS-UA-A geschickt.

M-RSconf (M-UA-A → EXS-UA-A):
X-Mms-Message-Type: m-rsend-conf
X-Mms-Transaction-ID: TRANSACTION-ID#1
X-Mms-Version: 1.0
X-Mms-Response-Status: ok
Message-ID: MESSAGE-ID#1
X-Mms-Application-ID: EXSA
X-Mms-Channel-ID: 1

Bis auf den Nachrichtentyp stimmt diese Nachricht mit der Nachricht M-Sconf überein.

Im MMS [1, 2] ist vorgesehen, einen MMS Teilnehmer über neue Nachrichten, die für ihn vorliegen und zum Herunterladen bereit sind, zu informieren. Diesen Zweck erfüllt die Empfängerbenachrichtigung M-Nind, in dem WAP-Standard als M-Notification.ind bezeichnet. In diesem Beispiel wird eine Benachrichtigung an den externen Server EXS-RS versendet.

M-Nind (M-RS-A → EXS-RS):
X-Mms-Message-Type: m-notification-ind
X-Mms-Transaction-ID: TRANSACTION-ID#2
X-Mms-Version: 1.0
From: M-UA-A@MMSA
Subject:Instant Message des EXSA
X-Mms-Message-Class: Personal
X-Mms-Expiry: 3600
X-Mms-Message-Size: XXX
X-Mms-Content-Location: www.MMSA.de/LOCATION#1
X-Mms-Application-ID: EXSA
X-Mms-Channel-ID: 1

Auch diese Nachricht enthält die erfindungsgemäß neuen Header-Felder.

Der externe Server bestätigt in diesem Beispiel den Erhalt der Benachrichtigung zunächst mit der MMS- Empfängerbenachrichtigungsbestätigung M-NRind, die keine erfindungsgemäßen Besonderheiten aufweist und deswegen hier nicht aufgeführt wird. Der Download der MM wird durch den Befehl W-Greq veranlasst. Die MM wird darauf vom M-RS in der Nachricht M-Rconf zum EXS-RS gesendet. Die Nachricht M-Rconf wird wie folgt codiert:

M-Rconf (M-RS-A → EXS-RS):
X-Mms-Message-Type: m-retrieve-conf
X-Mms-Transaction-ID: TRANSACTION-ID#3
X-Mms-Version: 1.0
Date: Wed, 16 May 2001 10:20:00 +0100
From: M-UA A@MMSA
To: EXS-RS@MMSA
Subject: Instant Message des EXSA
Content-Type: Application/*
X-Mms-Application-ID: EXSA
X-Mms-Channel-ID: 1
nEntries: 1
HeadersLen: XX
DataLen: XX
Content-Type: Application/*
< ... Hier werden die Daten der anderen Applikation eingefügt ... >

Der Empfänger EXS-RS quittiert den erfolgreichen Empfang der MM anschließend gemäß Stand der Technik mit der Nachricht M-Aind.

Die Kommunikation über die zweite Teilstrecke, d.h. vom externen Server EXS-RS zur empfangenden externen Nutzerapplikation EXS-UA-B, erfolgt analog zu dem oben beschriebenen Nachrichtenfluss, wie in der Abbildung von Figur 3 dargestellt. Der externe Server fungiert als sendende MMS-Nutzerapplikation. Die Nachricht wird auf der MMS-Ebene an die MMS-Nutzerapplikation M-UA B bei Teilnehmer B adressiert, d.h. die externe Verbindungseinheit benötigt zum Versenden der Nachricht auf die hier beschriebene Weise die Funktionalität einer MMS Nutzerapplikation und zusätzlich die Verknüpfung der Adresse des Teilnehmers des externen Dienstes, die Adresse von EXS-UA-B, mit der Adresse der MMS Nutzerapplikation im MMS Service B. Die Nachricht M-Sreq enthält die anwendungsspezifische Kennzeichnung durch die Felder X-Mms-Application-ID und optional X-Mms-Channel-ID, siehe wiederum Figur 3. Dadurch kann der Inhalt der Nachricht der entsprechenden externen Anwendung zugeordnet werden und von der empfangenden MMS- Nutzerapplikation M-UA-B an die externe Nutzerapplikation EXS-UA-B weitergereicht werden. Die restlichen Nachrichten werden entsprechend analog zur Beschreibung der ersten Teilstrecke aufgebaut.

Über diese beiden Teilstrecken hat nun also die externe Nutzerapplikation EXS-UA-A eines externen Dienstes bei Teilnehmer A, EXSA, Applikationsdaten - in diesem Fall eine Instant Message IM - an die externe Nutzerapplikation EXS-UA-B eines externen Dienstes bei Teilnehmer B, EXSB, verschickt und hierzu MMS als Transportmedium benutzt.

Die Funktionsweise der erfindungsgemäß neuen Kanalidentifikation für die Informationen in einer Multimedianachricht MM wird anhand der Abbildung von Figur 6 erläutert. Mit der Kanalidentifikation lassen sich entweder der komplette Inhalt der Multimedianachricht oder auch die einzelnen Datenelemente der Multimedianachricht logischen Kanälen zuordnen. Es besteht damit die Möglichkeit, mehrere Kommunikationsflüsse auch ein und derselben Applikation voneinander zu unterscheiden. Die Abbildung von Figur 6 zeigt ein Beispiel mit zwei verschiedenen externen Diensten, EXSA und EXSB, die ihre Informationen per MMS übertragen. Auf einem Terminal 1 werden je eine Instanz zweier Applikationen der externen Dienste EXSA und EXSB betrieben. Auf Terminal 2 wird eine Instanz einer externen Applikation des externen Dienstes EXSA betrieben. Alle drei Applikationen kommunizieren über MMS mit den entsprechenden Nutzerapplikationen auf Terminal 3, d.h. während Terminal 1 und Terminal 2 jeweils lediglich mit Terminal 3 kommunizieren, kommuniziert Terminal 3 sowohl mit Terminal 1, als auch mit Terminal 2. Zur Unterscheidung der Daten des externen Dienstes EXSA von und/oder für Terminal 1 von den Daten des externen Dienstes EXSA von und/oder für Terminal 2 werden die Daten von und/oder zu Terminal 1 zusätzlich mit X-Mms-Client-ID = 1 und die Daten von und/oder zu Terminal 2 zusätzlich mit X-Mms-Client-ID = 2 gekennzeichnet. Auf Terminal 3 kann die MMS- Nutzerapplikation somit die Daten der beiden unterschiedlichen Instanzen der Nutzerapplikation des externen Dienstes EXSA für Teilnehmer A unterscheiden und den entsprechenden Instanzen der Nutzerapplikation auf Terminal 3 zuweisen.

Zusammenfassend sind vorstehend in Form eines neuen Verfahrens zur Datenübertragung Möglichkeiten für eine erweiterte Nutzung insbesondere unter Verwendung des MMS durch eine strukturverträgliche Einführung zusätzlicher Signalisierungen zusammen mit einigen der jeweiligen Vorteile vorgestellt worden. Die in dem Sonderfall des MMS dazu notwendigen Transaktionen und Informationselemente der Nachrichten, die s.g. Kopf- oder Header-Felder, werden dementsprechend auch für bislang nicht verfügbare Anwendungen sinnvoll eingesetzt. Die erfindungsgemäß neue Signalisierung innerhalb der bekannten MMS- Nachrichtentypen und die erfindungsgemäß neuen Nachrichtentypen zur Anbindung externer Nutzerapplikationen an die MMS-Einheiten ermöglichen es, daß die Einheiten des MMS als Server und/oder Client von externen Anwendungen Daten in Multimedianachrichten entgegennehmen, transportieren und der Gegenstelle der externen Anwendung zur Verfügung stellen. Die externe Anwendung kann damit MMS als Transportmedium für die eigenen, aus Sicht von MMS beliebigen Inhalte nutzen. Weiterhin neu ist die Signalisierung zur Festlegung von Kanälen für die Inhalte der Multimedianachrichten. Dadurch können externe Applikationen oder auch MMS selbst Daten für unterschiedliche Zwecke bzw. für mehrere Prozesse in logischen Kanälen übermitteln.

Hintergrundangaben zu WAP und MMS finden sich zusammengefasst insbesondere an folgenden im vorstehenden Text referenzierten Stellen:
[1] 3G TS 22.140 version 4.1.0, Release 4; Third Generation Partnership Project; Technical Specification Group Terminals; Multimedia Messaging Service (MMS); Service Aspects; Stage 1, March 2001.
[2] 3G TS 23.140 version 4.2.0, Release 4; Third Generation Partnership Project; Technical Specification Group Terminals; Multimedia Messaging Service (MMS); Functional Description; Stage 2, March 2001.
[3] WAP-205-MMS Architecture Overview, Draft Specification; Wireless Application Protocol, Multimedia Messaging Service; Architecture Overview Specification, 25. April 2001.
[4] WAP-206-MMS Client Transactions, Draft Specification; Wireless Application Protocol; WAP Multimedia Messaging Service Client Transactions; 12. April 2001.
[5] WAP-209-MMSEncapsulation, Draft Specification Change Document; Wireless Application Protocol; Multimedia Messaging Service; Message Encapsulation; 18. April 2001.
[6] WAP-203-WSP, Specification, Approved Version, Wireless Application Protocol: Wireless Session Protocol; 4 May 2000.

## Patentansprüche

1. Verfahren zur Übertragung von Daten einer als MM-Nachricht bezeichnete Nachricht gemäß dem Multimedia Messaging Service, MMS, von einer MMS-Nutzerapplikation (M-UA-A) eines Teilnehmers (A) über ein Netzwerk zu einer MMS-Nutzerapplikation (M-UA-B) eines anderen Teilnehmers (B) und/oder umgekehrt, bei dem die Übertragung durch Transaktionen und den Daten zugefügte Header-Felder eines MMS-Transportprotokolls gesteuert wird, wobei die Header-Felder einen Feld-Namen und einen jeweiligen Feldwert umfassen,
**dadurch gekennzeichnet, daß** das MMS-Transportprotokoll durch einen MMS-externen Dienst (EXSA, EXSB) bei den Teilnehmern (A, B) genutzt wird, indem in dem MMS-Transportprotokoll ein zusätzliches Header-Feld zur Anbindung einer MMS-externen Nutzerapplikation (EXS-UA-A, EXS-UA-B) des MMS-externen Dienstes an die MMS-Nutzerapplikation (M-UA-A, M-UA-B) bei den Teilnehmern (A, B) verwendet wird.

2. Verfahren nach Anspruch 1,
**dadurch gekennzeichnet, daß** Inhalte der MM-Nachricht an die MMS-externe Nutzerapplikation (EXS-UA-A, EXS-UA-B) weitergegeben werden.

3. Verfahren nach einem der Anspruch 2,
**dadurch gekennzeichnet, daß** die MM-Nachricht an die MMS-Nutzerapplikation (M-UA-A, M-UA-B) adressiert wird.

4. Verfahren nach Anspruch 1,
**dadurch gekennzeichnet, daß** Inhalte der MM-Nachricht an eine. MMS-externe Verbindungseinheit (EXS-RS) weitergegeben werden.

5. Verfahren nach Anspruch 4,
**dadurch gekennzeichnet, daß** durch eine MMS-Verbindungseinheit (M-RS) eine Adresskonvertierung zur Anbindung der MMS-externen Verbindungseinheit (EXS-RS) vorgenommen wird, wobei die MMS-Verbindungseinheit (M-RS) eine Absenderadresse ersetzt, insbesondere durch eine eigene Adresse.

6. Verfahren nach einem der Ansprüche 5,
**dadurch gekennzeichnet, daß** die MM-Nachricht an die MMS-Verbindungseinheit (M-RS) adressiert wird.

7. Verfahren nach einem der Ansprüche 5 oder 6,
**dadurch gekennzeichnet, daß** die MM-Nachricht von der MMS-externen Verbindungseinheit (EXS-RS) des externen Dienstes (EXSA, EXSB) über den Multimedia Messaging Service an die MMS-Nutzerapplikation (M-UA-A, M-UA-B) versandt wird.

8. Verfahren nach Anspruch 7,
**dadurch gekennzeichnet, daß** eine Verbindung zwischen einer jeweiligen Adresse der Teilnehmer (A, B) für den externen Dienst (EXSA, EXSB) und einer jeweiligen Adresse der Teilnehmer (A, B) für den Multimedia Messaging Service in der MMS-externen Verbindungseinheit (EXS-RS) des externen Dienstes (EXSA, EXSB) mit dem Ziel gespeichert wird, Informationen für den Teilnehmer des externen Dienstes (EXSA, EXSB) in der MM-Nachricht verpackt an den Teilnehmer des Multimedia Messaging Service zu versenden.

9. Verfahren nach einem der vorhergehenden Ansprüche,
**dadurch gekennzeichnet, daß** durch die MMS-Nutzerapplikation (M-UA-A, M-UA-B) des Teilnehmers (A, B) eine Adresskonvertierung zur Anbindung der MMS-externen Nutzerapplikation (EXS-UA-A, EXS-UA-B) vorgenommen wird, wobei die MMS-Nutzerapplikation (M-UA-A, M-UA-B) eine Absenderadresse (EXS-UA-A) ersetzt, insbesondere durch eine eigene Adresse (M-UA-A, M-UA-B).

10. Verfahren nach einem der vorhergehenden Ansprüche,
**dadurch gekennzeichnet, daß** die MM-Nachricht zu einem Nachrichtenfluß durch die MMS-Nutzerapplikation (M-UA-A, M-UA-B) anhand einer Transaktionskennung, einer Applikationskennung und/oder einer Kanalkennung zugeordnet wird.

11. Verfahren nach Anspruch 10,
**dadurch gekennzeichnet, daß** es sich bei einem ersten Element "X-Mms-Application-ID" um einen Feldnamen des zusätzlichen Header-Feldes handelt.

12. Verfahren nach Anspruch 10,
**dadurch gekennzeichnet, daß** es sich bei einem zweiten Element "X-Mms-Channel-ID" um einen Feldnamen eines Header der MM-Nachricht handelt, durch den eine Signalisierung eines Kanals vorgenommen wird.

13. Verfahren nach einem der vorhergehenden Ansprüche,
**dadurch gekennzeichnet, daß** zur Kommunikation zwischen der MMS-externen Nutzerapplikation (EXS-UA-A, EXS-UA-B) und der MMS-Nutzerapplikation zusätzliche Nachrichtentypen verwendet werden.

14. Verfahren nach dem vorhergehenden Anspruch,
**dadurch gekennzeichnet, daß** als zusätzliche Nachrichtentypen eine
MMS-Fernsendeanfrage (M-RSreq),
MMS-Fernsendebestätigung (M-Rconf),
MMS-Fernempfängerbenachrichtigung (M-RNind),
MMS-Fernempfängerbenachrichtigungsbestätigung (M-RNRind),
MMS-Fernzustellanfrage (M-RGreq),
MMS-Fernzustellnachricht (M-RRconf),
MMS-Fernzustellungsbestätigung (M-RAind) und/oder
MMS-Fernzustellstatusbenachrichtigung (M-RDind) verwendet werden.

15. Verfahren nach einem der vorhergehenden Ansprüche,
**dadurch gekennzeichnet, daß** als zusätzliche Werte eines Header-Feldes "X-Mms-Message-Type"
m-rsend-req = <Octet 135>,
m-rsend-conf = <Octet 136>,
m-rnotification-ind = <Octet 137>,
m-rnotifyresp-ind = <Octet 138>,
m-rget-req = <Octet 139>,
m-rretrieve-conf = <Octet 140>,
m-racknowledge-ind = <Octet 141> und/oder
m-rdelivery-ind = <Octet 142>
mit entsprechender Codierung nach dem Wireless Application Protocol WAP Standard verwendet werden.

16. Verfahren nach einem der vorhergehenden Ansprüche,
**dadurch gekennzeichnet, daß** die Daten der MM-Nachricht auf ein mobiles Teilnehmer-Endgerät übertragen werden, insbesondere ein Mobiltelefon.

17. Computerprogrammerzeugnis zum Übertragen und/oder Empfangen von Daten einer als MM-Nachricht bezeichneten Nachricht gemäß dem Multimedia Messaging Service, MMS, von einer MMS-Nutzerapplikation (M-UA-A) eines Teilnehmers (A) über ein Netzwerk zu einer MMS-Nutzerapplikation (M-UA-B) eines anderen Teilnehmers (B) und/oder umgekehrt,
**dadurch gekennzeichnet, daß** das Computerprogrammerzeugnis zur Umsetzung eines Verfahrens nach einem der vorhergehenden Ansprüche ausgebildet ist.

18. Sende- und/oder Empfangseinheit zum Übertragen und/oder Empfangen von Daten einer als MM-Nachricht bezeichneten Nachricht gemäß dem Multimedia Messaging Service, MMS, von einer MMS-Nutzerapplikation (M-UA-A) eines Teilnehmers (A) über ein Netzwerk zu einer MMS-Nutzerapplikation (M-UA-B) eines anderen Teilnehmers (B) und/oder umgekehrt, bei der Mittel zur Steuerung der Übertragung durch Transaktionen und den Daten zugefügte Header-Felder eines MMS-Transportprotokolls vorgesehen sind, wobei die Header-Felder einen Feld-Namen und einen jeweiligen Feldwert umfassen,
**dadurch gekennzeichnet, daß** die Sende- und/oder Empfangseinheit ein Computerprogrammerzeugnis nach Anspruch 17 aufweist und zur Umsetzung eines Verfahrens nach einem der Ansprüche 1-16 ausgebildet ist.

19. Sende- und/oder Empfangseinheit nach dem vorhergehenden Anspruch,
**dadurch gekennzeichnet, daß** die Sende- und/oder Empfangseinheit als mobile Einheit ausgebildet ist, insbesondere als Mobiltelefon.

20. Kommunikationssystem zum Übertragen und/oder Empfangen von Daten einer als MM-Nachricht bezeichnete Nachricht gemäß dem Multimedia Messaging Service, MMS, von einer MMS-Nutzerapplikation (M-UA-A) eines Teilnehmers (A) über ein Netzwerk zu einer MMS-Nutzerapplikation (M-UA-B) eines anderen Teilnehmers (B) und/oder umgekehrt, bei dem Mittel zur Steuerung der Übertragung durch Transaktionen und den Daten zugefügte Header-Felder eines MMS-Transportprotokolls vorgesehen sind,
**dadurch gekennzeichnet, daß** mindestens eine Komponente des Kommunikationssystems nach einem Verfahren der Ansprüche 1 bis 16 arbeitet und/oder eine Sende- und/oder Empfangseinheit nach einem der Ansprüche 18 bis 19 umfasst.

## Claims

1. Method for transmitting data of a message based on the multimedia messaging service, MMS, which is called an MM message, from an MMS user application (M-UA-A) of one subscriber (A) via a network to an MMS user application (M-UA-B) of another subscriber (B) and/or vice versa, in which the transmission is controlled by transactions and header fields, added to the data, of an MMS transport protocol, wherein the header fields comprise a field name and a respective field value,
**characterized in that**
the MMS transport protocol is used by an MMS-external service (EXSA, EXSB) for the subscribers (A, B) by virtue of the MMS transport protocol involving the use of an additional header field for connecting an MMS-external user application (EXS-UA-A, EXS-UA-B) of the MMS-external service to the MMS user application (M-UA-A, M-UA-B) for the subscribers (A, B).

2. Method according to Claim 1,
**characterized in that**
contents of the MM message are forwarded to the MMS-external user application (EXS-UA-A, EXS-UA-B).

3. Method according to Claim 2,
**characterized in that**
the MM message is addressed to the MMS user application (M-UA-A, M-UA-B).

4. Method according to Claim 1,
**characterized in that**
contents of the MM message are forwarded to an MMS-external connecting unit (EXS-RS).

5. Method according to Claim 4,
**characterized in that**
an MMS connecting unit (M-RS) forms an address conversion to connect the MMS-external connecting unit (EXS-RS), wherein the MMS connecting unit (M-RS) replaces a sender address, particularly with an address of its own.

6. Method according to Claim 5,
**characterized in that**
the MM message is addressed to the MMS connecting unit (M-RS).

7. Method according to either of Claims 5 and 6,
**characterized in that**
the MM message is sent from the MMS-external connecting unit (EXS-RS) of the external service (EXSA, EXSB) via the multimedia messaging service to the MMS user application (M-UA-A, M-UA-B).

8. Method according to Claim 7,
**characterized in that**
a connection between a respective address of the subscribers (A, B) for the external service (EXSA, EXSB) and a respective address of the subscribers (A, B) for the multimedia messaging service is stored in the MMS-external connecting unit (EXS-RS) of the external service (EXSA, EXSB) with the aim of sending information for the subscriber of the external service (EXSA, EXSB) to the subscriber of the multimedia messaging service in a form packed in the MM message.

9. Method according to one of the preceding claims,
**characterized in that**
the MMS user application (M-UA-A, M-UA-B) of the subscriber (A, B) performs an address conversion to connect the MMS-external user application (EXS-UA-A, EXS-UA-B), wherein the MMS user application (M-UA-A, M-UA-B) replaces a sender address (EXS-UA-A), particularly with an address of its own (M-UA-A, M-UA-B).

10. Method according to one of the preceding claims,
**characterized in that**
the MM message is assigned to a message flow by the MMS user application (M-UA-A, M-UA-B) on the basis of a transaction identifier, an application identifier and/or a channel identifier.

11. Method according to Claim 10,
**characterized in that**
a first element "X-Mms-Application-ID" is a field name for the additional header field.

12. Method according to Claim 10,
**characterized in that**
a second element "X-Mms-Channel-ID" is a field name for a header of the MM message that performs signalling for a channel.

13. Method according to one of the preceding claims,
**characterized in that**
the communication between the MMS-external user application (EXS-UA-A, EXS-UA-B) and the MMS user application involves the use of additional message types.

14. Method according to the preceding claim,
**characterized in that**
the additional message types used are an
MMS remote transmission request (M-RSreq),
MMS remote transmission confirmation (M-Rconf),
MMS remote receiver notification (M-RNind),
MMS remote receiver notification confirmation (M-RNRind),
MMS remote delivery request (M-RGreq),
MMS remote delivery message (M-RRconf),
MMS remote delivery confirmation (M-RAind) and/or
MMS remote delivery status notification (M-RDind).

15. Method according to one of the preceding claims,
**characterized in that**
the additional values used for a header field "X-Mms-Message-Type" are
m-rsend-req = <byte 135>,
m-rsend-conf = <byte 136>,
m-rnotification-ind = <byte 137>,
m-rnotifyresp-ind = <byte 138>,
m-rget-req = <byte 139>,
m-rretrieve-conf = <byte 140>,
m-racknowledge-ind = <byte 141> and/or
m-rdelivery-ind = <byte 142>
with appropriate coding based on the Wireless Application Protocol WAP standard.

16. Method according to one of the preceding claims,
**characterized**
**in that** the data of the MM message are transmitted to a mobile subscriber terminal, particularly a mobile telephone.

17. Computer program product for transmitting and/or receiving data of a message based on the multimedia messaging service, MMS, which is called an MM message, from an MMS user application (M-UA-A) of one subscriber (A) via a network to an MMS user application (M-UA-B) of another subscriber (B) and/or vice versa,
**characterized**
**in that** the computer program product is designed to implement a method according to one of the preceding claims.

18. Transmission and/or reception unit for transmitting and/or receiving data of a message based on the multimedia messaging service, MMS, which is called an MM message, from an MMS user application (M-UA-A) of one subscriber (A) via a network to an MMS user application (M-UA-B) of another subscriber (B) and/or vice versa, in which means for controlling the transmission by means of transactions and header fields, added to the data, of an MMS transport protocol are provided, wherein the header fields comprise a field name and a respective field value,
**characterized**
**in that** the transmission and/or reception unit has a computer program product according to Claim 17 and is designed to implement a method according to one of Claims 1-16.

19. Transmission and/or reception unit according to the preceding claim,
**characterized**
**in that** the transmission and/or reception unit is in the form of a mobile unit, particularly in the form of a mobile telephone.

20. Communication system for transmitting and/or receiving data of a message based on the multimedia messaging service, MMS, which is called an MM message, from an MMS user application (M-UA-A) of one subscriber (A) via a network to an MMS user application (M-UA-B) of another subscriber (B) and/or vice versa, in which means for controlling the transmission by means of transactions and header fields, added to the data, of an MMS transport protocol are provided,
**characterized**
**in that** at least one component of the communication system operates using a method of Claims 1 to 16 and/or comprises a transmission and/or reception unit according to either of Claims 18 and 19.

## Revendications

1. Procédé de transmission de données d'un message qualifié de message MM selon le service de messagerie multimédia, MMS, d'une application d'utilisateur MMS (M-UA-A) d'un abonné (A) vers une application d'utilisateur MMS (M-UA-B) d'un autre abonné (B), par le biais d'un réseau, et/ou inversement, dans lequel la transmission est commandée par des transactions et des champs d'en-tête d'un protocole de transport MMS ajoutés aux données, les champs d'en-tête comprenant un nom de champ et une valeur de champ respective,
**caractérisé en ce que** le protocole de transport MMS est utilisé par un service extérieur au MMS (EXSA, EXSB) chez les abonnés (A, B), ceci en utilisant, dans le protocole de transport MMS, un champ d'en-tête supplémentaire pour connecter une application d'utilisateur extérieure au MMS (EXS-UA-A, EXS-UA-B) du service extérieur au MMS à l'application d'utilisateur MMS (M-UA-A, M-UA-B) chez les abonnés (A, B).

2. Procédé selon la revendication 1, **caractérisé en ce que** des contenus du message MM sont transférés à l'application d'utilisateur extérieure au MMS (EXS-UA-A, EXS-UA-B).

3. Procédé selon la revendication 2, **caractérisé en ce que** le message MM est adressé à l'application d'utilisateur MMS (M-UA-A, M-UA-B).

4. Procédé selon la revendication 1, **caractérisé en ce que** des contenus du message MM sont transférés à une unité de raccordement extérieure au MMS (EXS-RS).

5. Procédé selon la revendication 4, **caractérisé en ce qu'**une unité de communication MMS (M-RS) procède à une conversion d'adresse pour la connexion de l'unité de raccordement extérieure au MMS (EXS-RS), l'unité de raccordement MMS (M-RS) remplaçant une adresse d'émetteur, notamment par une adresse propre.

6. Procédé selon la revendication 5, **caractérisé en ce que** le message MM est adressé à l'unité de raccordement MMS (M-RS).

7. Procédé selon l'une des revendications 5 ou 6, **caractérisé en ce que** le message MM est envoyé à l'application d'utilisateur MMS (M-UA-A, M-UA-B) par l'unité de raccordement extérieure au MMS (EXS-RS) du service extérieur (EXSA, EXSB) par le biais du service de messagerie multimédia.

8. Procédé selon la revendication 7, **caractérisé en ce qu'**une raccordement entre une adresse respective des abonnés (A, B) pour le service extérieur (EXSA, EXSB) et une adresse respective des abonnés (A, B) pour le service de messagerie multimédia est enregistrée dans l'unité de raccordement extérieure au MMS (EXS-RS) du service extérieur (EXSA, EXSB) dans le but d'envoyer à l'abonné du service de messagerie multimédia, réunies en paquets dans le message MM, des informations pour l'abonné du service extérieur (EXSA, EXSB).

9. Procédé selon l'une des revendications précédentes, **caractérisé en ce que** l'application d'utilisateur MMS (MUA-A, M-UA-B) de l'abonné (A, B) procède à une conversion d'adresse pour la connexion de l'application d'utilisateur extérieure au MMS (EXS-UA-A, EXS-UA-B), l'application d'utilisateur MMS (M-UA-A, M-UA-B) remplaçant une adresse d'émetteur (EXS-UA-A), notamment par une adresse propre (M-UA-A, M-UA-B).

10. Procédé selon l'une des revendications précédentes, **caractérisé en ce que** le message MM est affecté à un flux de messages par l'application d'utilisateur MMS (M-UA-A, M-UA-B) grâce à un identifiant de transaction, un identifiant d'application et/ou un identifiant de canal.

11. Procédé selon la revendication 10, **caractérisé en ce qu'**un premier élément "X-Mms-Application-ID" consiste en un nom de champ du champ d'en-tête supplémentaire.

12. Procédé selon la revendication 10, **caractérisé en ce qu'**un second élément "X-Mms-Channel-ID" consiste en un nom de champ d'un en-tête du message MM permettant une signalisation d'un canal.

13. Procédé selon l'une des revendications précédentes, **caractérisé en ce que** des types de messages supplémentaires sont utilisés pour la communication entre l'application d'utilisateur extérieure au MMS (EXS-UA-A, EXS-UA-B) et l'application d'utilisateur MMS.

14. Procédé selon l'une des revendications précédentes, **caractérisé en ce que** l'on utilise, comme types de messages supplémentaires,
une requête d'envoi MMS à distance (M-RSreq),
une confirmation d'envoi MMS à distance (M-Rconf),
une notification au destinataire MMS à distance (M-RNind),
une confirmation de notification au destinataire MMS à distance (M-RNRind),
une requête de délivrance MMS à distance (M-RGreq),
un message de délivrance MMS à distance (M-RRconf),
une confirmation de délivrance MMS à distance (M-RAind) et/ou
une notification de statut de délivrance MMS à distance (M-RDind).

15. Procédé selon l'une des revendications précédentes, **caractérisé en ce que** l'on utilise, comme valeurs supplémentaires d'un champ d'en-tête "X-Mms-Message-Type",
m-rsend-req = <Octet 135>,
m-rsend-conf = <Octet 136>,
m-rnotification-ind = <Octet 137>,
m-rnotifyresp-ind = <Octet 138>,
m-rget-req = <Octet 139>,
m-rretrieve-conf = <Octet 140>,
m-racknowledge-ind = <Octet 141> et/ou m-rdelivery-ind = <Octet 142>
avec un codage correspondant selon le standard Wireless Application Protocol WAP.

16. Procédé selon l'une des revendications précédentes, **caractérisé en ce que** les données du message MM sont transmises sur un terminal d'abonné mobile, notamment un téléphone mobile.

17. Produit programme d'ordinateur pour la transmission et/ou la réception de données d'un message qualifié de message MM selon le service de messagerie multimédia, MMS, d'une application d'utilisateur MMS (M-UA-A) d'un abonné (A) vers une application d'utilisateur MMS (M-UA-B) d'un autre abonné (B), par le biais d'un réseau, et/ou inversement, **caractérisé en ce que** le produit programme d'ordinateur est conçu pour la mise en oeuvre d'un procédé selon l'une des revendications précédentes.

18. Unité émettrice et/ou réceptrice pour la transmission et/ou la réception de données d'un message qualifié de message MM selon le service de messagerie multimédia, MMS, d'une application d'utilisateur MMS (M-UA-A) d'un abonné (A) vers une application d'utilisateur MMS (M-UA-B) d'un autre abonné (B), par le biais d'un réseau, et/ou inversement, dans laquelle on prévoit des moyens de commande de la transmission grâce à des transactions et à des champs d'en-tête d'un protocole de transport MMS ajoutés aux données, les champs d'en-tête comprenant un nom de champ et une valeur de champ respective, **caractérisée en ce que** l'unité émettrice et/ou réceptrice présente un produit programme d'ordinateur selon la revendication 17 et est conçue pour la mise en oeuvre d'un procédé selon l'une des revendications 1-16.

19. Unité émettrice et/ou réceptrice selon la revendication précédente, **caractérisée en ce que** l'unité émettrice et/ou réceptrice est conçue en tant qu'unité mobile, notamment en tant que téléphone mobile.

20. Système de communication pour la transmission et/ou la réception de données d'un message qualifié de message MM selon le service de messagerie multimédia, MMS, d'une application d'utilisateur MMS (M-UA-A) d'un abonné (A) vers une application d'utilisateur MMS (M-UA-B) d'un autre abonné (B), par le biais d'un réseau, et/ou inversement, dans lequel on prévoit des moyens de commande de la transmission grâce à des transactions et des champs d'en-tête d'un protocole de transport MMS ajoutés aux données, **caractérisé en ce qu'**au moins une composante du système de communication fonctionne conformément à un procédé selon les revendications 1 à 16 et/ou comprend une unité émettrice et/ou réceptrice selon l'une des revendications 18 à 19.
